(19) Europäisches Patentamt
European Patent Office
Office européen des brevets

(11) EP 4 718 565 A1

(12) EUROPEAN PATENT APPLICATION
published in accordance with Art. 153(4) EPC

(43) Date of publication:
**01.04.2026 Bulletin 2026/14**

(21) Application number: **25820898.2**

(22) Date of filing: **01.04.2025**

(51) International Patent Classification (IPC):
***H01M 10/0567* (2010.01) *H01M 10/0525* (2010.01)**
***H01M 10/42* (2006.01)**

(52) Cooperative Patent Classification (CPC):
Y02E 60/10

(86) International application number:
**PCT/CN2025/086488**

(87) International publication number:
**WO 2026/011852 (15.01.2026 Gazette 2026/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.07.2024 CN 202410910196**

(71) Applicant: **Guangzhou Tinci Materials Technology Co., Ltd.**
**Guangzhou, Guangdong 510760 (CN)**

(72) Inventors:
- **LIAO, Bo**
  **Guangzhou**
  **Guangdong 510765 (CN)**
- **SUN, Wenpo**
  **Guangzhou**
  **Guangdong 510765 (CN)**
- **XIE, Tian**
  **Guangzhou**
  **Guangdong 510765 (CN)**

(74) Representative: **IPAZ**
**Bâtiment Platon**
**Parc Les Algorithmes**
**91190 Saint-Aubin (FR)**

# (54) ELECTROLYTE ADDITIVE, ELECTROLYTE, AND ELECTROCHEMICAL DEVICE

(57) The present application provides an electrolyte additive, an electrolytic solution, and an electrochemical device. The electrolyte additive includes a compound represented by formula 1 and a compound represented by formula 2, and the compound represented by formula 2 is selected from the group consisting of a compound represented by formula 2-A, a compound represented by formula 2-B, and a combination thereof. Through the above configuration, when the compound represented by formula 1 and the compound represented by formula 2 of the present application are used in combination as electrolyte additives, it is beneficial to form a stable solid electrolyte interface film at the negative electrode interface, and also beneficial to form a stable cathode electrolyte interface film at the positive electrode interface. This improves the stability of both the positive and negative electrode interfaces, reduces side reactions between the electrolytic solution and the electrode active materials, effectively inhibits the further decomposition of the electrolytic solution, reduces gas generation, decreases the growth rate of the internal resistance of the electrochemical device, and improves the high-temperature cycle performance and high-temperature storage performance of the electrochemical device.

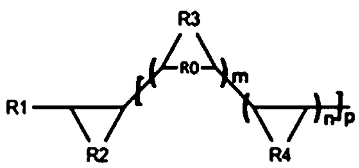

formula 1

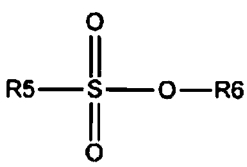

formula 2-A

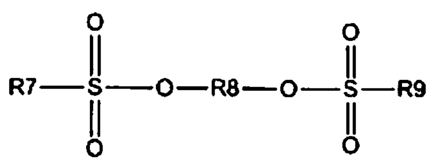

formula 2-B

EP 4 718 565 A1

Processed by Luminess, 75001 PARIS (FR)

## Description

The present application claims the priority of the Chinese Patent Application No. 202410910196.1, titled "ELECTROLYTE ADDITIVE, ELECTROLYTIC SOLUTION AND ELECTROCHEMICAL DEVICE", filed before the China National Intellectual Property Administration on July 9, 2024, which is incorporated herein by reference in its entirety.

## TECHNICAL FIELD

The present application relates to the field of electrochemical technology, in particular to an electrolyte additive, an electrolytic solution, and an electrochemical device.

## BACKGROUND

Rechargeable electrochemical devices are considered to be one of the most attractive energy storage systems due to their advantages such as high operating voltage, long life, and environmental friendliness. Nowadays, electrochemical devices, such as lithium-ion batteries, are widely used in consumer electronics, power batteries, energy storage batteries, and other fields.

With the rapid development of the electrochemical device industry, the market has placed higher demands on the energy density and service life of electrochemical devices. Currently, the energy density of an electrochemical device can be increased by various methods, such as raising the upper limit charging voltage or increasing the nickel content in the positive electrode material. However, traditional electrolytic solution systems are prone to decomposition reactions under high voltage, and side reactions are likely to occur between the positive electrode material and the electrolytic solution, affecting the structural stability of the positive electrode active material. This also leads to excessive consumption of the electrolytic solution and gas generation, increasing the internal resistance of the electrochemical device and seriously affecting its high-temperature cycle performance and high-temperature storage performance. Therefore, how to reduce the growth rate of the internal resistance of the electrochemical device and improve its high-temperature cycle performance and high-temperature storage performance has become an urgent problem to be solved.

## SUMMARY

The object of the present application is to provide an electrolyte additive, an electrolytic solution, and an electrochemical device to reduce the growth rate of the internal resistance of the electrochemical device and improve its high-temperature cycle performance and high-temperature storage performance. The specific technical solutions are as follows.

A first aspect of the present application provides an electrolyte additive, including a compound represented by formula 1 and a compound represented by formula 2, and the compound represented by formula 2 is selected from the group consisting of a compound represented by formula 2-A, a compound represented by formula 2-B, and a combination thereof:

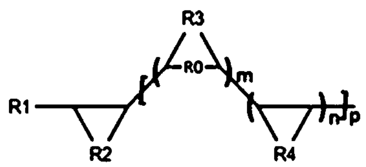

formula 1

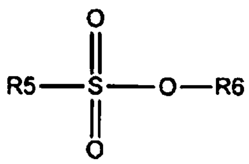

formula 2-A

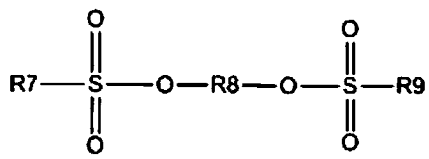

formula 2-B;

m and n are each independently an integer ranging from 0 to 3, and m and n are not 0 at the same time, p is an integer ranging from 1 to 5; R0 is selected from the group consisting of single bond and methylene; R1 is selected from the group consisting of hydrogen, halogen, $C_1$ to $C_5$ hydrocarbon group and $C_1$ to $C_5$ halogenated hydrocarbon group; R2, R3, and R4 are each independently selected from the group consisting of

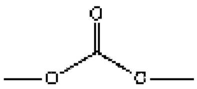 , 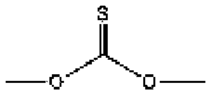 , 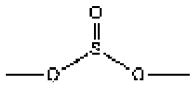 , 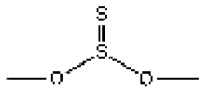 , 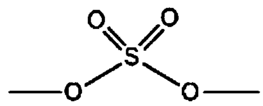 ,

and

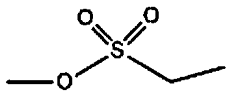 ;

R5 and R6 are each independently selected from the group consisting of substituted or unsubstituted phenyl, substituted or unsubstituted imidazolyl, substituted or unsubstituted $C_1$ to $C_5$ alkyl, substituted or unsubstituted $C_2$ to $C_5$ alkenyl, $C_1$ to $C_5$ alkoxy, substituted or unsubstituted $C_2$ to $C_5$ alkoxyalkyl, substituted or unsubstituted $C_1$ to $C_5$ carbonyl, substituted or unsubstituted $C_1$ to $C_5$ cyano, and halogen, when R5 and R6 are substituted, a substituent in each of R5 and R6 is independently selected from the group consisting of halogen and $C_1$ to $C_5$ alkyl; R7 and R9 are each independently selected from the group consisting of halogen and substituted or unsubstituted $C_1$ to $C_5$ alkyl, and R8 is selected from the group consisting of substituted or unsubstituted phenylene, substituted or unsubstituted $C_1$ to $C_5$ alkylene, $C_2$ to $C_5$ alkenylene, $C_2$ to $C_5$ alkynylene, and $C_2$ to $C_5$ alkyleneoxyalkylene, when R7 to R9 are substituted, a substituent in each of R7 to R9 is independently selected from the group consisting of halogen, hydroxyl, and phenyl. The compound represented by formula 1 of the present application can form interphase films at the positive and negative electrode interfaces when used as the electrolyte additive. However, to obtain stable solid electrolyte interphase (SEI) film and cathode electrolyte interphase (CEI) film, a relatively large amount of the compound represented by formula 1 is required. These film-forming processes are difficult to control, and an excessive amount of the compound represented by formula 1 tends to cause high initial film-forming impedance. Moreover, as battery cycling proceeds, the impedance of the electrolyte interphase film increases, thereby leading to elevated internal resistance in the electrochemical device and consequently affecting the cycle life. To address this issue, the present application uses a combination of the compound represented by formula 1 and the compound represented by formula 2 as the electrolyte additive. The compound represented by formula 2 is preferentially reduced on the surface of the negative electrode over the compound represented by formula 1 and other components of the electrolytic solution, which allows the formation of a solid electrolyte interphase (SEI) film rich in alkyl sulfonate on the surface of the negative electrode, thereby improving the stability of the negative electrode interface. Furthermore, the preferential reduction of the compound represented by formula 2 helps to suppress the further reduction of the compound represented by formula 1 and other components of the electrolytic solution at the negative electrode. This facilitates the formation of a stable solid electrolyte interphase (SEI) film at the negative electrode interface and a stable cathode electrolyte interphase (CEI) film at the positive electrode interface. Consequently, the stability of the positive and negative electrode at both electrode interfaces is improved, side reactions between the electrolytic solution and electrode active materials are reduced, and the further decomposition of the electrolytic solution is effectively inhibited. As a result, gas generation is reduced, the growth rate of the internal resistance of the electrochemical device is decreased, and the high-temperature cycle performance and high-temperature storage performance of the electrochemical device are improved.

In some embodiments of the present application, a mass ratio of the compound represented by formula 1 to the compound represented by formula 2 ranges from 0.1:1 to 16:1. By controlling the mass ratio of the compound represented by formula 1 to the compound represented by formula 2 within the range of the present application, it is beneficial to exert the synergistic effect of the compound represented by formula 1 and the compound represented by formula 2. Consequently, the stability of the positive and negative electrode interfaces is further improved, side reactions between the electrolytic solution and the electrode materials are further reduced. As a result, gas generation is reduced, the growth rate of the internal resistance of the electrochemical device is further decreased, and the high-temperature cycle performance and high-temperature storage performance of the electrochemical device are improved.

In some embodiments of the present application, the compound represented by formula 1 is selected from the group consisting of the following compounds and a combination thereof:

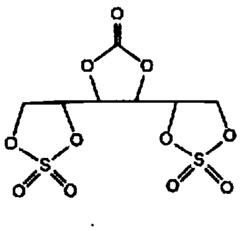 formula 1-1 , 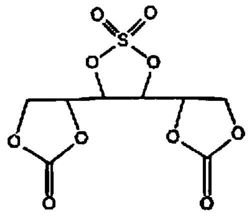 formula 1-2 , 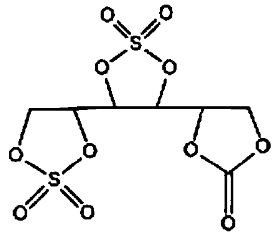 formula 1-3 , 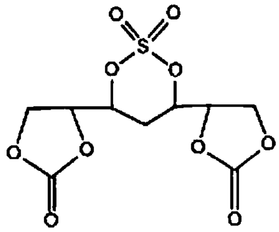 formula 1-4 ,

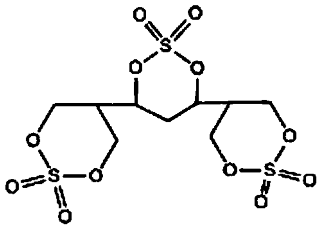 formula 1-5 , 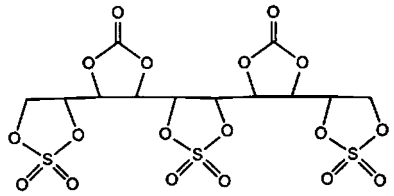 formula 1-6 , 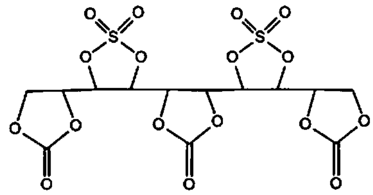 formula 1-7 ,

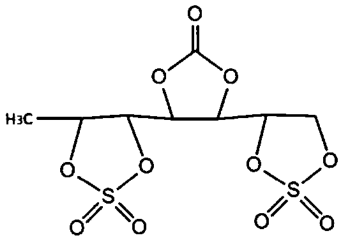 formula 1-8 , 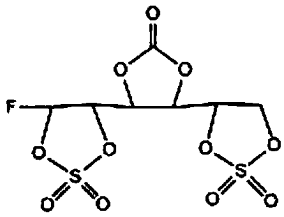 formula 1-9 , 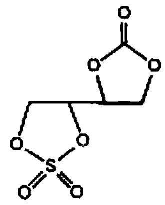 formula 1-10.

When the electrolyte additive includes the compound represented by formula 1 within the aforementioned range, it facilitates the formation of a stable CEI film at the positive electrode interface, improving the stability of the positive electrode interface, thereby further improving the high-temperature cycle performance and high-temperature storage performance of the electrochemical device, and reducing its internal resistance.

In some embodiments of the present application, the compound represented by formula 1 is the compound represented by formula 1-1.

In some embodiments of the present application, the compound represented by formula 2-A is selected from the group consisting of the following compounds and a combination thereof:

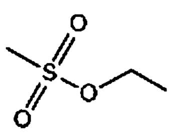 formula2-A1, 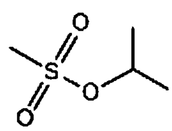 formula 2-A2, 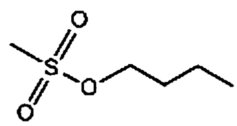 formula 2-A3,

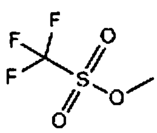 formula 2-A4, 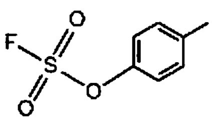 formula 2-A5, 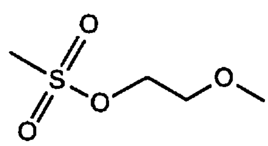 formula 2-A6,

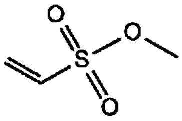 formula 2-A7, 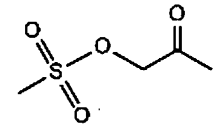 formula 2-A8, 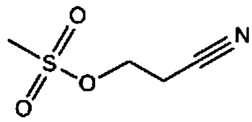 formula 2-A9,

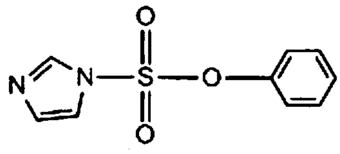 formula 2-A10.

In some embodiments of the present application, the compound represented by formula 2-B is selected from the group consisting of the following compounds and a combination thereof:

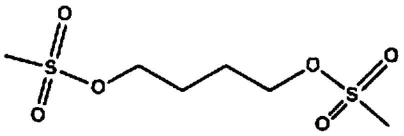 formula 2-B1, 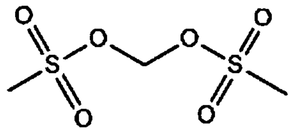 formula 2-B2,

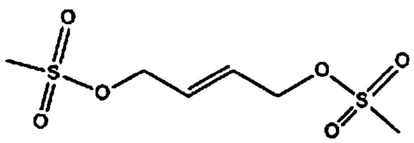 formula 2-B3, 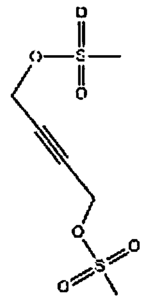 formula 2-B4,

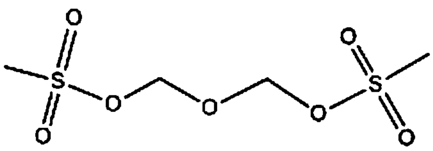 formula 2-B5, 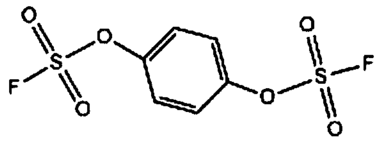 formula 2-B6.

When the electrolyte additive includes at least one selected from the group consisting of the compound represented by formula 2-A and the compound represented by formula 2-B within the aforementioned range, it is beneficial for the compound represented by formula 2 preferentially to be reduced on the surface of the negative electrode over the compound represented by formula 1 and other electrolytic solution components during the first charging process of the electrochemical device. This process allows the formation of a solid electrolyte interface film (SEI film) rich in alkyl sulfonate on the surface of the negative electrode. Consequently, the stability of the negative electrode interface is improved. Furthermore, the preferential reduction of the compound represented by formula 2 helps to inhibit the further reduction of the compound represented by formula 1 and other electrolytic solution components on the negative electrode, so that the compound represented by formula 2 and the compound represented by formula 1 work synergistically to form stable interface protective films on both the positive and negative electrodes. This further improves the high-temperature cycle performance and high-temperature storage performance of the electrochemical device, and reduces the growth rate of the internal resistance of the electrochemical device.

In some embodiments of the present application, the compound represented by formula 2 is the compound represented by formula 2-A10.

A second aspect of the present application provides an electrolytic solution, including a solvent, an electrolyte, and the electrolyte additive provided in the first aspect of the present application.

In some embodiments of the present application, based on the mass of the electrolytic solution, the mass percentage of the compound represented by formula 1 is C1%, and $0.05 \leq C1 \leq 8$; and/or, based on the mass of the electrolytic solution, the mass percentage of the compound represented by formula 2 is C2%, and $0.1 \leq C2 \leq 5$. By

controlling the mass percentage of the compound represented by formula 1 and/or the mass percentage of the compound represented by formula 2 in the electrolytic solution within the range of the present application, it is beneficial for the compound represented by formula 2 to be preferentially reduced on the surface of the negative electrode over the compound represented by formula 1 and other electrolytic solution components, which allows the formation of a solid electrolyte interface film (SEI film) rich in alkyl sulfonate on the surface of the negative electrode. Consequently, the stability of the negative electrode interface is improved, and the further reduction of the compound represented by formula 1 and other electrolytic solution components on the negative electrode is inhibited. This facilitates the formation of a stable CEI film by the compound represented by formula 1 at the positive electrode interface, improving the stability of the positive electrode interface, effectively inhibiting the further decomposition of the electrolytic solution, stabilizing the structural stability of the positive electrode material, and inhibiting the dissolution of transition metals from the positive electrode material layer. The compound represented by formula 2 and the compound represented by formula 1 work synergistically to form stable interface protective films on both the positive and negative electrodes, thereby further improving the high-temperature cycle performance and high-temperature storage performance of the electrochemical device, and reducing the growth rate of the internal resistance of the electrochemical device.

In some embodiments of the present application, the solvent is selected from the group consisting of a cyclic carbonate, an acyclic carbonate, an acyclic carboxylate, and a combination thereof; the cyclic carbonate is selected from the group consisting of ethylene carbonate, propylene carbonate, and a combination thereof; the acyclic carbonate is selected from the group consisting of dimethyl carbonate, diethyl carbonate, ethyl methyl carbonate, and a combination thereof; the acyclic carboxylate is selected from the group consisting of ethyl acetate, ethyl butyrate, ethyl propionate, methyl propionate, propyl propionate, propyl acetate, and a combination thereof; based on the mass of the electrolytic solution, the mass percentage of the solvent is C3%, and $60 \leq C3 \leq 89$; and/or, the electrolyte is selected from the group consisting of a lithium salt and a sodium salt; the lithium salt is selected from the group consisting of lithium hexafluorophosphate, lithium bis(fluorosulfonyl)imide, lithium bis(trifluoromethanesulfonyl)imide, and a combination thereof; the sodium salt is selected from the group consisting of sodium hexafluorophosphate, sodium tetrafluoroborate, sodium bis(fluorosulfonyl)imide, sodium bis(trifluoromethanesulfonyl)imide, sodium bis(oxalato)borate, sodium difluoro(oxalato)borate, sodium difluorodioxalato phosphate, sodium tetrafluoro(oxalato)phosphate, sodium 4,5-dicyano-2-(trifluoromethyl)imidazole, and a combination thereof; based on the mass of the electrolytic solution, the mass percentage of the electrolyte is C4%, and $10 \leq C4 \leq 18$. When the electrolytic solution includes the solvent within the aforementioned range and the mass percentage of the solvent is controlled within the range of the present application, and/or the electrolytic solution includes the electrolyte within the aforementioned range and the mass percentage of the electrolyte is controlled within the range of the present application, it enables the electrolytic solution to have suitable viscosity, high ionic conductivity, and good electrochemical stability, thereby further improving the high-temperature cycle performance and high-temperature storage performance of the electrochemical device.

In some embodiments of the present application, the electrolytic solution can further include an additional electrolyte additive, the additional electrolyte additive is selected from the group consisting of lithium tetrafluoroborate, 1,3-propanesultone, and a combination thereof; based on the mass of the electrolytic solution, the mass percentage of the additional electrolyte additive is C5%, and $0.1 \leq C5 \leq 20$. When the electrolytic solution includes the additional electrolyte additive within the aforementioned range and the mass percentage of the additional electrolyte additive is controlled within the range of the present application, it facilitates the formation of a stable interface film on the positive and/or negative electrode, thereby further improving the high-temperature cycle performance of the electrochemical device.

A third aspect of the present application provides an electrochemical device, including a positive electrode plate, a negative electrode plate, a separator, and the electrolytic solution provided in the second aspect of the present application. In some embodiments of the present application, the negative electrode plate includes a negative current collector and a negative electrode material layer disposed on at least one surface of the negative current collector. The negative electrode material layer including a negative electrode active material, a negative electrode conductive agent, and a negative electrode binder. The electrochemical device satisfies relation I:

$$0.02 \leqslant \frac{C2}{\sqrt[3]{D_{50} \times m}} \leqslant 1.5$$

relation I,

$D_{50}$ is the particle size corresponding to 50% of cumulative volume when measured from the smaller particle size side in the volume-based particle size distribution of the negative electrode active material particles, in units of $\mu m$; m is the

binding force between the negative electrode material layer and the negative current collector, in units of N/m; and C2% is the mass percentage of the compound represented by formula 2 based on the mass of the electrolytic solution. By controlling the particle size $D_{50}$ of the negative electrode active material particles, the binding force m between the negative electrode material layer and the negative current collector, and the mass percentage C2 of the compound represented by formula 2 to satisfy relation I, it is beneficial to improve the electron conductivity and ion conductivity of the negative electrode, and it is also beneficial for the compound represented by formula 2 to form a stable SEI film on the negative electrode, improving the stability of the negative electrode interface. Consequently, the growth rate of the internal resistance of the electrochemical device is reduced and the high-temperature cycle performance and high-temperature expansion performance of the electrochemical device are improved.

In some embodiments of the present application, the electrochemical device satisfies at least one of the following conditions: (1) $7\ \mu m \leq D_{50} \leq 15\ \mu m$; and (2) $3\ N/m \leq m \leq 30\ N/m$. When the electrochemical device satisfies at least one of the aforementioned conditions, it is beneficial for further reducing the growth rate of the internal resistance of the electrochemical device and improving the high-temperature cycle performance and high-temperature expansion performance of the electrochemical device.

Beneficial effects of the present application:

The present application provides an electrolyte additive, an electrolytic solution, and an electrochemical device. The electrolyte additive includes a compound represented by formula 1 and a compound represented by formula 2, and the compound represented by formula 2 is selected from the group consisting of a compound represented by formula 2-A, a compound represented by formula 2-B, and a combination thereof. Through the above configuration, when the compound represented by formula 1 and the compound represented by formula 2 of the present application are used in combination as electrolyte additives, it is beneficial to form a stable solid electrolyte interface film (SEI film) at the negative electrode interface, and also beneficial to form a stable cathode electrolyte interface film (CEI film) at the positive electrode interface. Consequently, the stability of both the positive and negative electrode interfaces is improved, side reactions between the electrolytic solution and the electrode active materials are reduced, and the further decomposition of the electrolytic solution is effectively inhibited, thereby reducing gas generation, decreasing the growth rate of the internal resistance of the electrochemical device, and improving the high-temperature cycle performance and high-temperature storage performance of the electrochemical device.

It should be noted that the implementation of any product or method of the present application does not necessarily require achieving all the above-mentioned advantages simultaneously.

## DETAILED DESCRIPTION

The technical solutions in the embodiments of the present application will be described clearly and completely below. It is obvious that the described embodiments are only a part of the embodiments of the present application, and not all of them. All other embodiments obtained by those skilled in the art based on the embodiments of the present application shall fall within the scope of protection of the present application.

It should be noted that in the specific embodiments of the present application, lithium-ion batteries and sodium-ion batteries are used as examples of electrochemical devices to explain the present application, but the electrochemical device of the present application is not limited to lithium-ion batteries and sodium-ion batteries.

A first aspect of the present application provides an electrolyte additive, including a compound represented by formula 1 and a compound represented by formula 2, and the compound represented by formula 2 is selected from the group consisting of a compound represented by formula 2-A, a compound represented by formula 2-B, and a combination thereof:

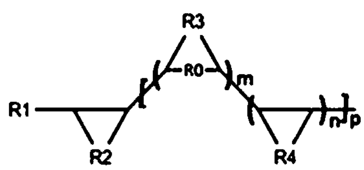

formula 1

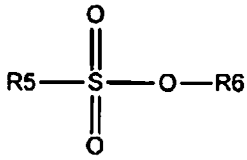

formula 2-A

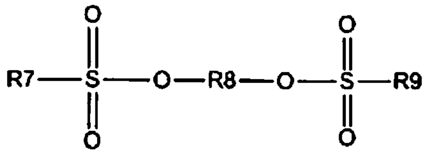

formula 2-B;

m and n are each independently an integer ranging from 0 to 3, and m and n are not 0 at the same time, p is an integer ranging from 1 to 5, R0 is selected from the group consisting of single bond and methylene; R1 is selected from the group consisting of hydrogen, halogen, $C_1$ to $C_5$ hydrocarbon group and $C_1$ to $C_5$ halogenated hydrocarbon group; R2, R3, and R4 are each independently selected from the group consisting of

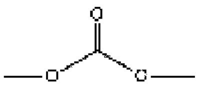 , 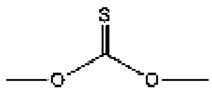 , 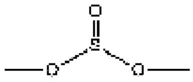 , 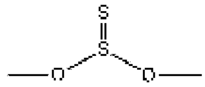 , 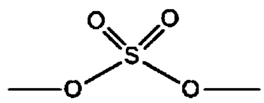

and

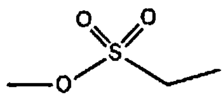 ;

R5 and R6 are each independently selected from the group consisting of substituted or unsubstituted phenyl, substituted or unsubstituted imidazolyl, substituted or unsubstituted $C_1$ to $C_5$ alkyl, substituted or unsubstituted $C_2$ to $C_5$ alkenyl, $C_1$ to $C_5$ alkoxy, substituted or unsubstituted $C_2$ to $C_5$ alkoxyalkyl, substituted or unsubstituted $C_1$ to $C_5$ carbonyl, substituted or unsubstituted $C_1$ to $C_5$ cyano, and halogen, when R5 and R6 are substituted, a substituent in each of R5 and R6 is independently selected from the group consisting of halogen and $C_1$ to $C_5$ alkyl; R7 and R9 are each independently selected from the group consisting of halogen and substituted or unsubstituted $C_1$ to $C_5$ alkyl, and R8 is selected from the group consisting of substituted or unsubstituted phenylene, substituted or unsubstituted $C_1$ to $C_5$ alkylene, $C_2$ to $C_5$ alkenylene, $C_2$ to $C_5$ alkynylene, and $C_2$ to $C_5$ alkyleneoxyalkylene, when R7 to R9 are substituted, a substituent in each of R7 to R9 is independently selected from the group consisting of halogen, hydroxyl, and phenyl. The aforementioned halogen is selected from the group consisting of fluorine, chlorine, bromine, and a combination thereof, preferably fluorine.

The inventors have found through research that when the electrolyte additive simultaneously includes the compound represented by formula 1 and the compound represented by formula 2, during the first charging process of the electrochemical device, the compound represented by formula 2 is preferentially reduced on the surface of the negative electrode over the compound represented by formula 1 and other electrolytic solution components, which allows the formation of a solid electrolyte interface film (SEI film) rich in alkyl sulfonate on the surface of the negative electrode, thereby improving the stability of the negative electrode interface and effectively inhibits further reduction of the compound represented by formula 1 and other electrolytic solution components on the surface of the negative electrode. During further charging of the electrochemical device, the compound represented by formula 1 can be oxidized on the surface of the positive electrode, forming a stable cathode electrolyte interface film (CEI film) on the surface of the positive electrode, which helps to inhibit the further decomposition of the electrolytic solution. Consequently, the structural stability of the positive electrode material is improved, and the dissolution of transition metals from the positive electrode material layer is inhibited. Thus, the synergistic effect of the compound represented by formula 1 and the compound represented by formula 2 can significantly improve the high-temperature cycle performance and high-temperature storage performance of the electrochemical device and reduce the growth rate of its internal resistance.

In some embodiments of the present application, the mass ratio of the compound represented by formula 1 to the compound represented by formula 2 ranges from 0.1:1 to 16:1. For example, the mass ratio of the compound represented by formula 1 to the compound represented by formula 2 can be 0.1:1, 0.5:1, 0.8:1, 1:1, 3:1, 5:1, 8:1, 10:1, 12:1, 15:1, 16:1, or any range formed between any two of these values. By controlling the mass ratio of the compound represented by formula 1 to the compound represented by formula 2 within the range of the present application, it is beneficial to exert the synergistic effect of the compound represented by formula 1 and the compound represented by formula 2. Consequently, the stability of the positive and negative electrode interfaces is further improved, side reactions between the electrolytic solution and the electrode materials are further reduced, thereby reducing gas generation, further decreasing the growth

rate of the internal resistance of the electrochemical device, and improving the high-temperature cycle performance and high-temperature storage performance of the electrochemical device.

In some embodiments of the present application, the compound represented by formula 1 is selected from the group consisting of the following compounds and a combination thereof:

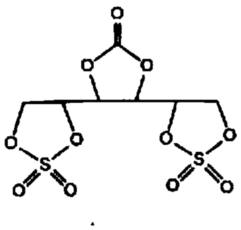
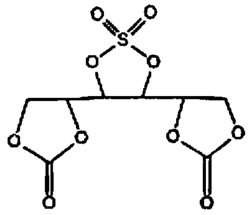
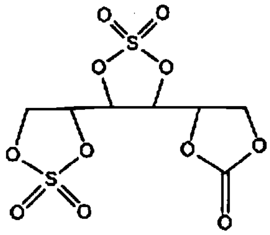
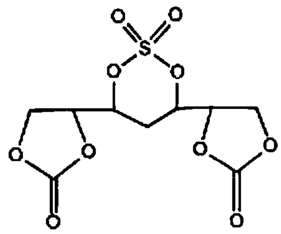

formula 1-1 , formula 1-2 , formula 1-3 , formula 1-4 ,

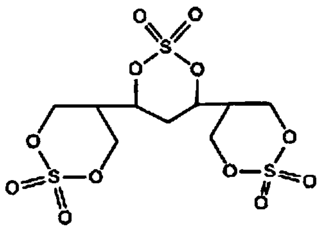
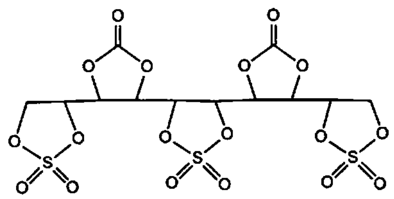
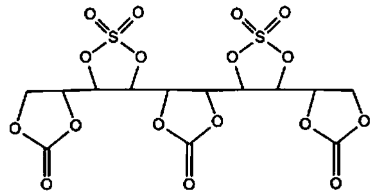

formula 1-5 , formula 1-6 , formula 1-7 ,

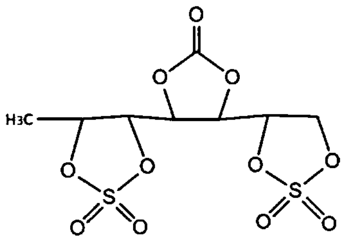
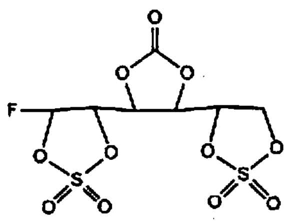
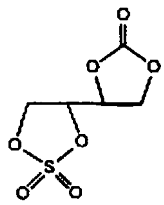

formula 1-8 , formula 1-9 , formula 1-10.

When the electrolyte additive includes the compound represented by formula 1 within the aforementioned range, it facilitates the formation of a stable CEI film at the positive electrode interface. Consequently, the stability of the positive electrode interface is improved, the further decomposition of the electrolytic solution is effectively inhibited, the structural stability of the positive electrode material is stabilized, and the dissolution of transition metals from the positive electrode material layer is inhibited, thereby further improving the high-temperature cycle performance and high-temperature storage performance of the electrochemical device and reducing the growth rate of its internal resistance.

In some embodiments of the present application, the compound represented by formula 1 is the compound represented by formula 1-1. When the electrolyte additive includes the compound represented by formula 1-1, it facilitates the formation of a stable CEI film at the positive electrode interface. Consequently, the stability of the positive electrode interface is improved, the further decomposition of the electrolytic solution is effectively inhibited, the structural stability of the positive electrode material is stabilized, and the dissolution of transition metals from the positive electrode material layer is inhibited, thereby further improving the high-temperature cycle performance and high-temperature storage performance of the electrochemical device and reducing the growth rate of its internal resistance.

In some embodiments of the present application, the compound represented by formula 2-A is selected from the group consisting of the following compounds and a combination thereof:

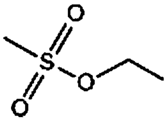 formula2-A1, 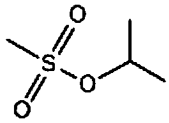 formula 2-A2, 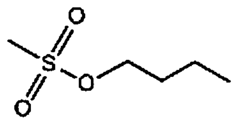 formula 2-A3,

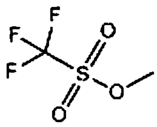 formula 2-A4, 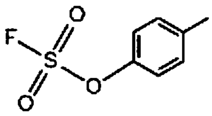 formula 2-A5, 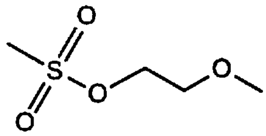 formula 2-A6,

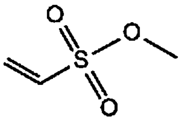 formula 2-A7, 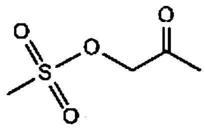 formula 2-A8, 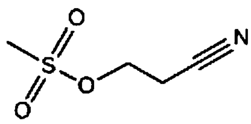 formula 2-A9,

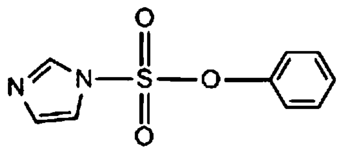 formula 2-A10.

In some embodiments of the present application, the compound represented by formula 2-B is selected from the group consisting of the following compounds and a combination thereof:

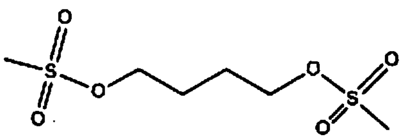 formula 2-B1, 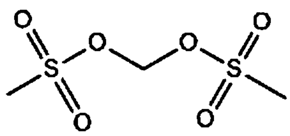 formula 2-B2,

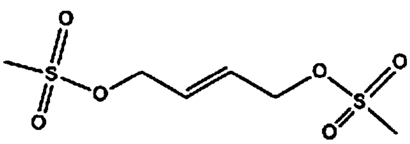 formula 2-B3, 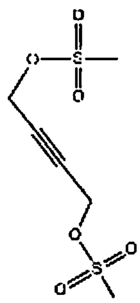 formula 2-B4,

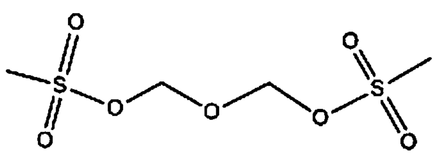 formula 2-B5, 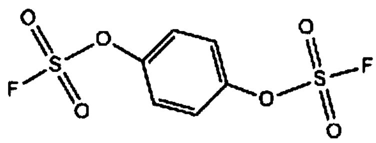 formula 2-B6.

Since the compound represented by formula 2 has smaller steric hindrance and some electron-withdrawing groups, when the electrolyte additive includes at least one selected from the group consisting of the compounds represented by formula 2-A and the compound represented by formula 2-B within the aforementioned range, it is beneficial for the compound represented by formula 2 to be preferentially reduced on the surface of the negative electrode over the compound represented by formula 1 and other electrolytic solution components during the first charging process of the electrochemical device. This process allows the formation of a solid electrolyte interface film (SEI film) rich in alkyl sulfonate on the surface of the negative electrode. Compared to a cyclic structure, the compound represented by formula 2 has an acyclic structure, which can avoid the generation of an SEI film of low stability that contains sulfonates with

unsaturated bonds (C=C and C≡C) during reduction. Moreover, the lithium alkyl sulfonate component helps to improve the stability of the negative electrode interface, thereby improving the high-temperature cycle performance and high-temperature storage performance. Additionally, the preferential reduction of the compound represented by formula 2 helps inhibit further reduction of the compound represented by formula 1 and other electrolytic solution components on the negative electrode. The compound represented by formula 2 and the compound represented by formula 1 work synergistically to form stable interface protective films on both the positive and negative electrodes, further improving the high-temperature cycle performance and high-temperature storage performance of the electrochemical device and reducing the growth rate of its internal resistance.

In some embodiments of the present application, the compound represented by formula 2 is the compound represented by formula 2-A10. When the electrolyte additive includes the compound represented by formula 2-A10, it effectively facilitates the formation of a solid electrolyte interface film (SEI film) rich in alkyl sulfonate on the surface of the negative electrode, enhancing the stability of the negative electrode interface, inhibiting further reduction of the compound represented by formula 1 and other electrolytic solution components on the negative electrode. The compound represented by formula 2 and the compound represented by formula 1 work synergistically to form stable interface protective films on both the positive and negative electrodes, further improving the high-temperature cycle performance and high-temperature storage performance of the electrochemical device and reducing the growth rate of its internal resistance. At the same time, the imidazolyl in the formula 2-A10 compound contains a nitrogen atom with a lone pair of electrons, enabling the compound to exhibit weak Lewis basicity in the electrolytic solution, which can effectively inhibit the increase in electrolytic solution acidity and water content.

A second aspect of the present application provides an electrolytic solution, including a solvent, an electrolyte, and the electrolyte additive provided in the first aspect of the present application. The electrolytic solution includes the electrolyte additive within the scope of the present application, and when the electrolyte additive is applied to an electrochemical device, it helps to improve the stability of the positive and negative electrode interfaces, reduce side reactions between the electrolytic solution and the electrode active materials, effectively inhibit excessive consumption of the electrolytic solution, thereby reducing gas generation, decreasing the growth rate of the internal resistance of the electrochemical device, and improving the high-temperature cycle performance and high-temperature storage performance of the electrochemical device.

In some embodiments of the present application, based on the mass of the electrolytic solution, the mass percentage of the compound represented by formula 1 is C1%, and $0.05 \leq C1 \leq 8$. For example, the value of the mass percentage C1% of the compound represented by formula 1 can be 0.05%, 0.1%, 0.5%, 1%, 2%, 3%, 4%, 5%, 6%, 7%, 8%, or any range formed between any two of these values. By controlling the mass percentage of the compound represented by formula 1 in the electrolytic solution within the range of the present application, it facilitates the formation of a stable CEI film at the positive electrode interface. Consequently, the stability of the positive electrode interface is improved, the further decomposition of the electrolytic solution is effectively inhibited, the structural stability of the positive electrode material is stabilized, and the dissolution of transition metals from the positive electrode material layer is inhibited, thereby further improving the high-temperature cycle performance and high-temperature storage performance of the electrochemical device, and reducing the growth rate of its internal resistance.

In some embodiments of the present application, based on the mass of the electrolytic solution, the mass percentage of the compound represented by formula 2 is C2%, and $0.1 \leq C2 \leq 5$. For example, the value of the mass percentage C2% of the compound represented by formula 2 can be 0.1%, 0.5%, 1%, 2%, 3%, 4%, 5%, or any range formed between any two of these values. By controlling the mass percentage of the compound represented by formula 2 in the electrolytic solution within the range of the present application, it is beneficial for the compound represented by formula 2 to be preferentially reduced on the surface of the negative electrode over the compound represented by formula 1 and other electrolytic solution components, which allows the formation of a solid electrolyte interface film (SEI film) rich in alkyl sulfonate on the surface of the negative electrode, thereby improving the stability of the negative electrode interface with low impedance. It can also effectively inhibit further reduction of the compound represented by formula 1 and other electrolytic solution components on the negative electrode. The compound represented by formula 2 and the compound represented by formula 1 work synergistically to form stable interface protective films on both the positive and negative electrodes, further improving the high-temperature cycle performance and high-temperature storage performance of the electrochemical device and reducing the growth rate of its internal resistance.

In some embodiments of the present application, based on the mass of the electrolytic solution, the mass percentage of the compound represented by formula 1 is C1%, and $0.05 \leq C1 \leq 8$; and based on the mass of the electrolytic solution, the mass percentage of the compound represented by formula 2 is C2%, and $0.1 \leq C2 \leq 5$. By controlling the mass percentage of the compound represented by formula 1 and the mass percentage of the compound represented by formula 2 in the electrolytic solution within the ranges of the present application, it is beneficial for the compound represented by formula 2 to be preferentially reduced on the surface of the negative electrode over the compound represented by formula 1 and other electrolytic solution components, which allows the formation of a solid electrolyte interface film (SEI film) rich in alkyl sulfonate on the surface of the negative electrode, thereby improving the stability of the negative electrode interface,

and inhibiting further reduction of the compound represented by formula 1 and other electrolytic solution components on the negative electrode. This facilitates the formation of a stable CEI film by the compound represented by formula 1 at the positive electrode interface, improving the stability of the positive electrode interface, effectively inhibiting the further decomposition of the electrolytic solution, stabilizing the structural stability of the positive electrode material, and inhibiting the dissolution of transition metals from the positive electrode material layer. The compound represented by formula 2 and the compound represented by formula 1 work synergistically to form stable interface protective films on both the positive and negative electrodes, further improving the high-temperature cycle performance and high-temperature storage performance of the electrochemical device and reducing the growth rate of its internal resistance.

In some embodiments of the present application, the solvent is selected from the group consisting of a cyclic carbonate, an acyclic carbonate, an acyclic carboxylate, and a combination thereof. The cyclic carbonate is selected from the group consisting of ethylene carbonate, propylene carbonate, and a combination thereof. The acyclic carbonate is selected from the group consisting of dimethyl carbonate, diethyl carbonate, ethyl methyl carbonate, and a combination thereof. The acyclic carboxylate is selected from the group consisting of ethyl acetate, ethyl butyrate, ethyl propionate, methyl propionate, propyl propionate, propyl acetate, and a combination thereof. Based on the mass of the electrolytic solution, the mass percentage of the solvent is C3%, and $60 \le C3 \le 89$. For example, the value of the mass percentage C3% of the solvent can be 60%, 65%, 70%, 75%, 80%, 85%, 89%, or any range formed between any two of these values. When the electrolytic solution includes the solvent within the aforementioned range and the mass percentage of the solvent is controlled within the range of the present application, it enables the electrolytic solution to have suitable viscosity, high ionic conductivity, and good electrochemical stability, thereby further improving the high-temperature cycle performance and high-temperature storage performance of the electrochemical device.

In some embodiments of the present application, the electrolyte is selected from the group consisting of a lithium salt and a sodium salt. The lithium salt is selected from the group consisting of lithium hexafluorophosphate, lithium bis(fluorosulfonyl)imide, lithium bis(trifluoromethanesulfonyl)imide, and a combination thereof. The sodium salt is selected from the group consisting of sodium hexafluorophosphate, sodium tetrafluoroborate, sodium bis(fluorosulfonyl)imide, sodium bis(trifluoromethanesulfonyl)imide, sodium bis(oxalato)borate, sodium difluoro(oxalato)borate, sodium difluorodioxalato phosphate, sodium tetrafluoro(oxalato)phosphate, sodium 4,5-dicyano-2-(trifluoromethyl)imidazole, and a combination thereof. Based on the mass of the electrolytic solution, the mass percentage of the electrolyte is C4%, and $10 \le C4 \le 18$. For example, the value of the mass percentage C4% of the electrolyte can be 10%, 11%, 12%, 13%, 14%, 15%, 16%, 17%, 18%, or any range formed between any two of these values. When the electrolytic solution includes the electrolyte within the aforementioned range and the mass percentage of the electrolyte is controlled within the range of the present application, it enables the electrolytic solution to have suitable viscosity, high ionic conductivity and good electrochemical stability, thereby further improving the high-temperature cycle performance and high-temperature storage performance of the electrochemical device.

In some embodiments of the present application, the solvent is selected from the group consisting of a cyclic carbonate, an acyclic carbonate, an acyclic carboxylate, and a combination thereof. The cyclic carbonate is selected from the group consisting of ethylene carbonate propylene carbonate, and a combination thereof. The acyclic carbonate is selected from the group consisting of dimethyl carbonate, diethyl carbonate, ethyl methyl carbonate, and a combination thereof. The acyclic carboxylate is selected from the group consisting of ethyl acetate, ethyl butyrate, ethyl propionate, methyl propionate, propyl propionate, propyl acetate, and a combination thereof. Based on the mass of the electrolytic solution, the mass percentage of the solvent is C3%, and $60 \le C3 \le 89$. The electrolyte is selected from the group consisting of a lithium salt and a sodium salt. The lithium salt is selected from the group consisting of lithium hexafluorophosphate, lithium bis(fluorosulfonyl)imide, lithium bis(trifluoromethanesulfonyl)imide, and a combination thereof. The sodium salt is selected from the group consisting of sodium hexafluorophosphate, sodium tetrafluoroborate, sodium bis(fluorosulfonyl) imide, sodium bis(trifluoromethanesulfonyl)imide, sodium bis(oxalato)borate, sodium difluoro(oxalato)borate, sodium difluorodioxalato phosphate, sodium tetrafluoro(oxalato)phosphate, sodium 4,5-dicyano-2-(trifluoromethyl)imidazole, and a combination thereof. Based on the mass of the electrolytic solution, the mass percentage of the electrolyte is C4%, and $10 \le C4 \le 18$. When the electrolytic solution includes the solvent within the aforementioned range and the mass percentage of the solvent is controlled within the range of the present application, and includes the electrolyte within the aforementioned range and the mass percentage of the electrolyte is controlled within the range of the present application, it enables the electrolytic solution to have suitable viscosity, high ionic conductivity, and good electrochemical stability, further improving the high-temperature cycle performance and high-temperature storage performance of the electrochemical device.

In some embodiments of the present application, the electrolytic solution can further include an additional electrolyte additive, the additional electrolyte additive is selected from the group consisting of lithium tetrafluoroborate and 1,3-propanesultone. Based on the mass of the electrolytic solution, the mass percentage of the additional electrolyte additive is C5%, and $0.1 \le C5 \le 20$. For example, the mass percentage C5% of the additional additive can be 0.1%, 1%, 2%, 3%, 5%, 8%, 10%, 13%, 15%, 18%, 20%, or any range formed between any two of these values. When the electrolytic solution includes the additional electrolyte additive within the aforementioned range and the mass percentage of the

additional electrolyte additive is controlled within the range of the present application, it is beneficial for forming a stable interface film on the positive and negative electrodes, further improving the high-temperature cycle performance of the electrochemical device.

A third aspect of the present application provides an electrochemical device, including a positive electrode plate, a negative electrode plate, a separator, and the electrolytic solution provided in the second aspect of the present application. When the electrochemical device includes the electrolytic solution within the scope of the present application, it helps to improve the stability of the positive and negative electrode interfaces, reduce side reactions between the electrolytic solution and the electrode active materials, and effectively inhibit excessive consumption of the electrolytic solution, thereby reducing gas generation, decreasing the growth rate of the internal resistance of the electrochemical device, and improving the high-temperature cycle performance and high-temperature storage performance of the electrochemical device.

In some embodiments of the present application, the negative electrode plate includes a negative current collector and a negative electrode material layer disposed on at least one surface of the negative current collector, the negative electrode material layer including a negative electrode active material, a negative electrode conductive agent, and a negative electrode binder, and the electrochemical device satisfies relation I:

$$0.02 \leqslant \frac{C2}{\sqrt[3]{D_{50} \times m}} \leqslant 1.5$$

relation I

$D_{50}$ is the particle size corresponding to 50% of cumulative volume when measured from the smaller particle size side in the volume-based particle size distribution of the negative electrode active material particles, in units of μm; m is the binding force between the negative electrode material layer and the negative current collector, in units of N/m; and C2% is the mass percentage of the compound represented by formula 2 based on the mass of the electrolytic solution. The value of relation I can be 0.02, 0.05, 0.1, 0.3, 0.5, 0.8, 1, 1.2, 1.3, 1.5, or any range formed between any two of these values. By controlling $D_{50}$, m, and C2 to satisfy relation I, it is beneficial to improve the electron conductivity and ion conductivity of the negative electrode plate. It is also beneficial for the compound represented by formula 2 to form a stable SEI film on the negative electrode, enhancing the stability of the negative electrode interface, thereby further reducing the growth rate of the internal resistance of the electrochemical device and improving its high-temperature cycle performance and high-temperature expansion performance.

In some embodiments of the present application, 7 μm ≤ $D_{50}$ ≤ 15μm. For example, $D_{50}$ can be 7 μm, 8 μm, 9 μm, 10 μm, 11 μm, 12 μm, 13 μm, 14 μm, 15 μm, or any range formed between any two of these values. By controlling the particle size $D_{50}$ of the negative electrode active material within the range of the present application and satisfying relation I, the negative electrode active material has suitable active sites, the transport path of active metal ions (e.g., $Li^+$, $Na^+$) within the negative electrode active material particles is short, and side reactions between the negative electrode active material and the electrolytic solution are reduced, which are beneficial for decreasing the growth rate of the internal resistance of the electrochemical device and improving its high-temperature cycle performance and high-temperature storage performance.

In some embodiments of the present application, 3 N/m ≤ m ≤ 30 N/m. For example, m can be 3 N/m, 5 N/m, 10 N/m, 13 N/m, 15 N/m, 18 N/m, 20 N/m, 23 N/m, 25 N/m, 28 N/m, 30 N/m, or any range formed between any two of these values. When the binding force m between the negative electrode material layer and the negative current collector is within the range of the present application and satisfies relation I, the transport path of active metal ions (e.g., $Li^+$, $Na^+$) is short, and the negative electrode plate has good electron conductivity and ion conductivity, improving the kinetic performance and cycle performance of the electrochemical device.

In some embodiments of the present application, 7 μm ≤ $D_{50}$ ≤ 15 μm, and 3 N/m ≤ m ≤ 30 N/m. By controlling the values of $D_{50}$ and m within the ranges of the present application and satisfying relation I, the electron conductivity and ion conductivity of the negative electrode plate can be further improved, and it is beneficial for the compound represented by formula 2 to form a stable SEI film on the negative electrode, enhancing the stability of the negative electrode interface, thereby further reducing the growth rate of the internal resistance of the electrochemical device and improving its high-temperature cycle performance and high-temperature expansion performance.

In some embodiments of the present application, based on the mass of the negative electrode material layer, the mass percentage X% of the negative electrode binder ranges from 1% to 4%.

Typically, the magnitude of the binding force m between the negative electrode material layer and the negative current collector can be adjusted by changing the mass percentage of the negative electrode binder in the negative

electrode material layer. Under otherwise constant conditions, increasing the mass percentage of the negative electrode binder increases the binding force m between the negative electrode material layer and the negative current collector; decreasing the mass percentage of the negative electrode binder decreases the binding force m between the negative electrode material layer and the negative current collector.

The present application does not particularly limit the type of negative electrode active material, as long as the objective of the present application can be achieved. For example, the negative electrode active material may include, but is not limited to, graphite, soft carbon, hard carbon, silicon-based materials, tin-based materials, and lithium titanate. Graphite may include, but is not limited to, at least one selected from the group consisting of natural graphite and artificial graphite. The aforementioned silicon-based materials may include, but are not limited to, at least one selected from the group consisting of elemental silicon, silicon-oxygen compounds, silicon-carbon composites, silicon-nitrogen composites, and silicon alloys. The aforementioned tin-based materials may include at least one selected from the group consisting of elemental tin, tin-oxygen compounds, and tin alloys.

In the present application, the negative electrode active material can be obtained commercially, and the negative electrode active material with the desired $D_{50}$ can be selected in combination with the "Test for Particle Size $D_{50}$ of the Negative Electrode Active Material" provided in the present application.

In the present application, the negative electrode plate includes a negative current collector and a negative electrode material layer disposed on at least one surface of the negative current collector. The aforementioned "negative electrode material layer disposed on at least one surface of the negative current collector" means that the negative electrode material layer can be disposed on one surface of the negative current collector along its thickness direction, or can be disposed on both surfaces of the negative current collector along its thickness direction. It should be noted that the "surface" herein can be the entire area of the negative current collector surface, or a part of the negative current collector surface. The present application does not particularly limit the negative current collector, as long as the objective of the present application can be achieved. For example, the negative current collector can be copper foil, copper alloy foil, nickel foil, stainless steel foil, titanium foil, foamed nickel or foamed copper, aluminum foil, or a composite negative current collector. The aforementioned composite negative current collector can be a polymer material base layer and a metal layer formed on at least one surface of the polymer material base layer. The material of the polymer material base layer can include, but is not limited to, at least one selected from the group consisting of polypropylene (PP), polyethylene terephthalate (PET), and polybutylene terephthalate (PBT). The material of the metal layer can include, but is not limited to, at least one selected from the group consisting of copper, copper alloy, nickel, and nickel alloy. The present application does not particularly limit the thickness of the negative electrode material layer and the negative current collector, as long as the objective of the present application can be achieved. For example, the thickness of the single-sided negative electrode material layer ranges from 50 $\mu$m to 180 $\mu$m, and the thickness of the negative current collector ranges from 3 $\mu$m to 10 $\mu$m.

The present application does not particularly limit the types of the negative electrode conductive agent and the negative electrode binder, as long as the objective of the present application can be achieved. For example, the negative electrode conductive agent can include, but is not limited to, at least one selected from the group consisting of Super P, acetylene black, Ketjen black, carbon nanotubes, graphene, and carbon fiber. The aforementioned carbon nanotubes can include, but are not limited to, single-walled carbon nanotubes and/or multi-walled carbon nanotubes. The aforementioned carbon fiber can include, but is not limited to, vapor-grown carbon fiber (VGCF) and/or nano carbon fiber. For example, the negative electrode binder can include, but is not limited to, at least one selected from the group consisting of styrene-butadiene rubber (SBR), polyacrylic acid (PAA), sodium polyacrylate (PAAS), polyacrylamide (PAM), polyvinyl alcohol (PVA), sodium alginate (SA), sodium carboxymethyl cellulose (CMC), polymethacrylic acid (PMAA), and carboxymethyl chitosan (CMCS).

In the present application, the electrochemical device includes a positive electrode plate. The positive electrode plate includes a positive current collector and a positive electrode material layer disposed on at least one surface of the positive current collector. The aforementioned "positive electrode material layer disposed on at least one surface of the positive current collector" means that the positive electrode material layer can be disposed on one surface of the positive current collector along its thickness direction, or can be disposed on both surfaces of the positive current collector along its thickness direction. It should be noted that the "surface" here can be the entire area of the positive current collector surface, or a part of the positive current collector surface. The present application does not impose special restrictions, as long as the objective of the present application can be achieved. For example, the positive current collector can be aluminum foil, aluminum alloy foil, or a composite positive current collector. The aforementioned composite positive current collector can include a polymer material base layer and a metal layer formed on at least one surface of the polymer material base layer. The material of the polymer material base layer can include, but is not limited to, at least one selected from the group consisting of polypropylene (PP), polyethylene terephthalate (PET), and polybutylene terephthalate (PBT). The material of the metal layer can include, but is not limited to, at least one selected from the group consisting of aluminum, aluminum alloy, nickel, and nickel alloy. The present application does not particularly limit the thickness of the positive electrode material layer and the positive current collector, as long as the objective of the present application can be achieved. For

example, the thickness of the single-sided positive electrode material layer ranges from 50 μm to 250 μm, and the thickness of the positive current collector ranges from 7 μm to 15 μm.

The positive electrode material layer includes a positive electrode active material. The present application does not particularly limit the positive electrode active material, as long as the objective of the present application can be achieved. For example, the positive electrode active material can include, but is not limited to, at least one selected from the group consisting of lithium iron phosphate ($LiFePO_4$), lithium manganese iron phosphate, $LiCoO_2$, $LiNi_xCo_yMn_zO_2$ ($0 \leq x, y, z \leq 1, x+y+z = 1$), lithium-rich manganese-based materials ($xLi_2MnO_3 \cdot (1-x)LiAO_2$, A can be Ni, Co, Mn), lithium nickel manganese oxide ($LiNi_{0.5}Mn_{1.5}O_4$), $Na_{0.44}MnO_2$, P2 layered $NaMO_2$ (M is selected from the group consisting of Ni, Mn, Fe, and a combination thereof), $NaFePO_4$, $Na_4Fe_3(PO_4)_2P_2O_7$, $Na_3V_2(PO_4)_3$, $Na_3V_2(PO_4)_2F_3$, $Na_2Fe(CN)_6$, and $Na_2MnFe(CN)_6$.

The positive electrode material layer can also include a positive electrode conductive agent and a positive electrode binder. The present application does not particularly limit the types of the positive electrode conductive agent and the positive electrode binder, as long as the objective of the present application can be achieved. For example, the positive electrode conductive agent can include, but is not limited to, at least one selected from the group consisting of Super P, acetylene black, Ketjen black, carbon nanotubes, graphene, and carbon fiber. For example, the positive electrode binder can include, but is not limited to, at least one selected from the group consisting of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. The present application does not particularly limit the mass ratio of the positive electrode active material, conductive agent, and binder in the positive electrode material layer. Those skilled in the art can select according to actual needs, as long as the objective of the present application can be achieved.

In the present application, the electrochemical device further includes a separator. The present application does not particularly limit the separator, as long as the objective of the present application can be achieved. For example, the material of the separator can include, but is not limited to, at least one selected from the group consisting of polyethylene (PE), polypropylene (PP), glass fiber, polyester (e.g., polyethylene terephthalate (PET) film), cellulose, polyimide (PI), and polyamide (PA). The type of separator can include at least one selected from the group consisting of woven membrane, non-woven fabric, microporous membrane, composite membrane, calendered membrane, and spun membrane. In the present application, the thickness of the separator is not particularly limited, as long as the objective of the present application can be achieved. For example, the thickness of the separator can range from 4 μm to 20 μm.

In the present application, the electrochemical device further includes a casing for containing the positive electrode plate, separator, negative electrode plate, electrolytic solution, and other components known in the field of secondary batteries. The present application does not limit the aforementioned other components. The present application does not particularly limit the casing, which can be a casing known in the art, as long as the objective of the present application can be achieved. For example, the casing can be a hard shell casing or a flexible casing. The material of the hard shell casing can be a metal. The present application does not limit the type of metal, and metal hard shell casings known in the art can be used, as long as the objective of the present application can be achieved. The flexible casing can be a metal plastic film, such as aluminum plastic film, steel plastic film, and other plastic film.

The electrochemical device of the present application is not particularly limited and can include any device that undergoes an electrochemical reaction. In one embodiment of the present application, the electrochemical device can include, but is not limited to: lithium-ion secondary batteries (lithium-ion batteries), sodium-ion secondary batteries (sodium-ion batteries), and other electrochemical device.

The preparation process of the electrochemical device of the present application is well-known to those skilled in the art, and the present application imposes no special restrictions. For example, the preparation process of the electrochemical device can include, but is not limited to, the following steps: stacking the positive electrode plate, separator, and negative electrode plate in order, and performing operations such as winding or folding as needed to obtain an electrode assembly with a wound structure; placing the electrode assembly into a casing; injecting electrolytic solution into the casing and sealing it to obtain a secondary battery. Alternatively, stacking the positive electrode plate, separator, and negative electrode plate in order, then fixing the four corners of the entire stacked structure with tape to obtain an electrode assembly with a stacked structure; placing the electrode assembly into a casing; injecting electrolytic solution into the casing and sealing it to obtain an electrochemical device. In addition, components such as over-current protection elements and guide plates can also be placed in the casing as needed to prevent pressure rise and over-charge/discharge inside the secondary battery.

## EXAMPLES

Hereinafter, Examples and Comparative Examples are given to describe the embodiments of the present application more specifically. Various tests and evaluations were carried out according to the following methods. In addition, unless otherwise specified, "parts" and "%" are based on mass.

**Test methods and equipment:**

**Test for particle size $D_{50}$ of the negative electrode active material**

1% Ethyl phenyl polyethylene glycol (Nonidet P40) dispersant and the negative electrode active material to be tested were ultrasonicated together for 1 minute, and then the particle size distribution was tested using a laser particle size analyzer (instrument model: Malvern MS300). In the volume-based particle size distribution of the negative electrode active material, the particle size corresponding to 50% of cumulative volume when measured from the smaller particle size side is $D_{50}$.

**Test for binding force m between negative electrode material layer and negative current collector**

The lithium-ion battery after formation, shaping, and capacity grading was fully discharged to 2V at a constant current of 0.5C and then disassembled to obtain the negative electrode plate. After washing three times with dimethyl carbonate (DMC), the negative electrode plate was placed in an oven and dried at 80 C for 24 h. Then, a 180 °peel test was performed using a tensile testing machine to measure the binding force between the negative electrode material layer and the negative current collector. The specific test was conducted according to the national standard GB/T 2790-1995 "Adhesives, 180 ° peel strength test method".

**High-temperature cycle performance test and internal resistance growth rate test**

The lithium-ion battery was placed in a 45 °C constant temperature chamber and allowed to stand for 30 minutes. Then, the lithium-ion battery was charged at a constant current of 1C to a voltage of 3.6V, then charged at a constant voltage of 3.6V until the current reached 0.05C, and then discharged at a constant current of 1C to a voltage of 2V. This was considered one charge-discharge cycle. The above charge-discharge cycle was repeated until 2000 cycles. The maximum discharge capacity in the first three charge-discharge cycles was recorded as Q1, and the AC internal resistance of the lithium-ion battery after the third discharge cycle was recorded as ACR1. The discharge capacity after 2000 cycles was recorded as Q2, and the AC internal resistance was recorded as ACR2. The charge-discharge cycle test instrument was a Neware BTS, and the AC internal resistance test instrument was a battery internal resistance tester.

Capacity retention rate (%) = Q2 / Q1 $\times$ 100%; the high-temperature cycle performance of the lithium-ion battery was evaluated by the capacity retention rate. A higher capacity retention rate indicates better high-temperature cycle performance of the lithium-ion battery.

Internal resistance growth rate (%) = [(ACR2 / ACR1) - 1] $\times$ 100%.

**High-temperature storage performance test**

The lithium-ion battery was placed in an environment of 25 °C, charged at a constant current of 1C to 3.6V, and then charged at a constant voltage of 3.6V until the current reached 0.05C. The thickness of the lithium-ion battery was measured and recorded as $d_0$. Then, the lithium-ion battery was placed in a 70 °C constant temperature chamber and allowed to stand for 15 days, and the surface state of the lithium-ion battery was observed.

Criterion: If the battery cell separates from the aluminum plastic film packaging bag, i.e., it is in a non-vacuum state, the lithium-ion battery is judged to have produced gas.

The test methods for the high-temperature cycle performance, internal resistance growth rate, and high-temperature storage performance of sodium-ion batteries in Examples 1-26 were the same as those for lithium-ion batteries described above.

Example 1-1

<Preparation of electrolytic solution>

In an inert atmosphere with water content less than 0.1 ppm and oxygen content less than 1 ppm, ethylene carbonate (EC), ethyl methyl carbonate (EMC), and ethyl acetate (EA) were mixed in a mass ratio of 3:6:1 to obtain a base solvent. Then, lithium hexafluorophosphate ($LiPF_6$), lithium bis(fluorosulfonyl)imide (LiFSI), the compound represented by formula 1-1, and the compound represented by formula 2-A10 were added to the base solvent and mixed uniformly to obtain the electrolytic solution. Based on the mass of the electrolytic solution, the mass percentage of $LiPF_6$ was 9%, the mass percentage of LiFSI was 5%, the mass percentage of the compound represented by formula 1-1 was 1%, the mass percentage of the compound represented by formula 2-A10 was 0.5%, and the balance of the base solvent was 84.5%.

<Preparation of negative electrode plate>

The negative electrode active material graphite, conductive agent acetylene black, binder sodium carboxymethyl cellulose (CMC), and styrene-butadiene rubber (SBR) were mixed in a mass ratio of 95:2:2:1 (based on the mass of the negative electrode material layer, the mass percentage X of the negative electrode binder sodium carboxymethyl cellulose (CMC) was 2%). Deionized water was added as a solvent to prepare a slurry with a solid content of 49 wt%. After uniform mixing with a vacuum stirrer, the negative electrode slurry was obtained. The negative electrode slurry was uniformly coated on one surface of a negative current collector copper foil with a thickness of 9 μm and dried at 90 °C to obtain a negative electrode plate with a single-sided coated negative electrode material layer. The coating weight of the negative electrode material layer was 8 $mg/mm^2$. Then, the above steps were repeated on the other surface of the copper foil to obtain a negative electrode plate with double-sided coated negative electrode material layers. After drying at 85 °C, rolling, slitting, and tab welding, a negative electrode plate with a specification of 74 mm × 59 mm was obtained for use. The thickness of the single-sided negative electrode material layer was 111 μm.

<Preparation of positive electrode plate>

The positive electrode active material lithium iron phosphate ($LiFePO_4$), positive electrode conductive agent acetylene black, and positive electrode binder polyvinylidene fluoride (PVDF) were mixed in a mass ratio of 96:2:2. N-methylpyrrolidone (NMP) was added as a solvent to prepare a slurry with a solid content of 55 wt%. After uniform mixing under vacuum, the positive electrode slurry was obtained. The positive electrode slurry was uniformly coated on one surface of a positive current collector aluminum foil with a thickness of 12 μm and dried at 90°C to obtain a positive electrode plate with a single-sided coated positive electrode material layer. The coating weight of the positive electrode material layer was 17 $mg/mm^2$. Then, the above steps were repeated on the other surface of the aluminum foil to obtain a positive electrode plate with double-sided coated positive electrode material layers. After drying at 85 °C, rolling, slitting, and tab welding, a positive electrode plate with a specification of 70 mm × 55 mm was obtained for use. The thickness of the single-sided positive electrode material layer was 158 μm.

<Preparation of separator>

A polyethylene (PE) porous membrane with a thickness of 10 μm (provided by Shenzhen Xingyuancaizhi Technology Material Co., Ltd.) was used as the separator.

<Preparation of lithium-ion battery>

The above-prepared positive electrode plate, separator, and negative electrode plate were stacked in order, with the separator placed between the positive and negative electrode plates for isolation, and then wound to obtain an electrode assembly. The electrode assembly was placed into an aluminum plastic film packaging bag, and moisture was removed at 85 °C. The prepared electrolytic solution was injected, and after vacuum sealing, standing, formation, shaping, and other processes, a lithium-ion battery with a rated capacity of 2 Ah was obtained. After standing for 48 hours, the upper limit voltage of the formation was 3.6V, the formation temperature was 45 °C, and the formation pressure was 300 kgf.

Example 1-2 to Example 1-25

These were the same as Example 1-1, except that in <Preparation of Electrolytic Solution >, the types of the compound represented by formula 1 or the compound represented by formula 2 were adjusted according to Table 1.

Example 1-26

This was the same as Example 1-1, except that in <Preparation of electrolytic solution>, the electrolyte lithium hexafluorophosphate ($LiPF_6$) and lithium bis(fluorosulfonyl)imide (LiFSI) were replaced with sodium hexafluorophosphate ($NaPF_6$), where based on the mass of the electrolytic solution, the mass percentage of the electrolyte $NaPF_6$ was 14%, in <Preparation of Negative Electrode Plate>, the negative electrode active material graphite was replaced with hard carbon, and in <Preparation of Positive Electrode Plate>, the positive electrode active material was replaced with $NaFePO_4$. A sodium-ion battery was prepared. All other steps were the same as in Example 1-1.

Example 2-1 to Example 2-11

These were the same as Example 1-1, except that in <Preparation of electrolytic solution>, the mass percentages of the compound represented by formula 1 or the compound represented by formula 2 were adjusted according to Table 2. When the content of the compound represented by formula 1 or formula 2 changed, the mass percentage of the base solvent changed accordingly, while the mass percentage of the electrolyte remained unchanged.

Example 2-12 to Example 2-15

These were the same as Example 1-1, except that in <Preparation of negative electrode plate>, the negative electrode active material with the corresponding particle size $D_{50}$ was selected according to Table 2.

Example 2-16 to Example 2-19

These were the same as Example 1-1, except that in <Preparation of negative electrode plate>, the mass percentage of the negative electrode binder was adjusted, and the mass percentage of the negative electrode active material changed accordingly.

Example 2-20 to Example 2-24

These were the same as Example 1-1, except that the relevant parameters were adjusted according to Table 2. Specifically, in <Preparation of negative electrode plate>, when the mass percentage of the negative electrode binder changed, the mass percentage of the negative electrode active material changed accordingly; and in < Preparation of electrolytic solution >, when the of the compound represented by formula 1 or formula 2 changed, the mass percentage of the base solvent changed accordingly, while the mass percentage of the electrolyte remained unchanged.

Example 2-25 to Example 2-28

These were the same as Example 1-1, except that in <Preparation of electrolytic solution>, the mass percentage C5% and types of the additional electrolyte additive were adjusted according to Table 2. When the of the additional electrolyte additive C5% changed, the mass percentage of the base solvent changed accordingly, while the mass percentage of the electrolyte remained unchanged. In Table 2, $LiBF_4$ is lithium tetrafluoroborate, and PS is 1,3-propanesultone.

Example 2-29

This was the same as Example 1-1, except that in <Preparation of electrolytic solution>, lithium bis(fluorosulfonyl)imide (LiFSI) was replaced with lithium hexafluorophosphate ($LiPF_6$). Based on the mass of the electrolytic solution, the total mass percentage of lithium hexafluorophosphate ($LiPF_6$) was 14%.

Example 2-30

This was the same as Example 1-1, except that in <Preparation of electrolytic solution>, the addition amount of lithium bis(fluorosulfonyl)imide (LiFSI) was adjusted. Based on the mass of the electrolytic solution, the mass percentage of LiFSI was 1%. When the mass percentage of LiFSI changed, the mass percentage of the base solvent changed accordingly, while the mass percentage of $LiPF_6$ remained unchanged, i.e., the mass percentage of the electrolyte C4% was 10%.

Example 2-31

This was the same as Example 1-1, except that in <Preparation of electrolytic solution>, the addition amount of lithium hexafluorophosphate ($LiPF_6$) was adjusted. Based on the mass of the electrolytic solution, the mass percentage of $LiPF_6$ was 13%. When the mass percentage of $LiPF_6$ changed, the mass percentage of the base solvent changed accordingly, while the mass percentage of LiFSI remained unchanged, i.e., the mass percentage of the electrolyte C4% was 18%.

Example 2-32

This was the same as Example 1-1, except that in <Preparation of electrolytic solution>, the solvent was adjusted to propylene carbonate (PC), dimethyl carbonate (DMC), and ethyl butyrate (EB) in a mass ratio of 3:6:1.

Comparative Example 1 to Comparative Example 5

These were the same as Example 1-1, except that in <Preparation of electrolytic solution>, the contents of the compound represented by formula 1 and/or the compound represented by formula 2 were adjusted according to Table 1. When the content of the compound represented by formula 1 or formula 2 changed, the mass percentage of the base solvent changed accordingly, while the mass percentage of the electrolyte remained unchanged. In Table 1, ethylene sulfate is abbreviated as DTD, and 1,3-propanesultone is abbreviated as PS.

The preparation parameters and performance parameters of each Example and Comparative Example are represented by Tables 1 to 2.

Table 1

| | Compound represented by formula 1 | C1(%) | Compound represented by formula 2 | C2(%) | Capacity retention rate (%) | Internal resistance growth rate (%) | Gas generation during storage |
|---|---|---|---|---|---|---|---|
| Example 1-1 | formula 1-1 | 1 | formula 2-A10 | 0.5 | 88.46 | 17.20 | no |
| Example 1-2 | formula 1-2 | 1 | formula 2-A10 | 0.5 | 87.56 | 17.57 | no |
| Example 1-3 | formula 1-3 | 1 | formula 2-A10 | 0.5 | 88.38 | 18.55 | no |
| Example 1-4 | formula 1-4 | 1 | formula 2-A10 | 0.5 | 87.11 | 18.58 | no |
| Example 1-5 | formula 1-5 | 1 | formula 2-A10 | 0.5 | 88.39 | 18.30 | no |
| Example 1-6 | formula 1-6 | 1 | formula 2-A10 | 0.5 | 88.68 | 18.54 | no |
| Example 1-7 | formula 1-7 | 1 | formula 2-A10 | 0.5 | 88.40 | 17.68 | no |
| Example 1-8 | formula 1-8 | 1 | formula 2-A10 | 0.5 | 87.73 | 18.19 | no |
| Example 1-9 | formula 1-9 | 1 | formula 2-A10 | 0.5 | 87.47 | 18.57 | no |
| Example 1-10 | formula 1-10 | 1 | formula 2-A10 | 0.5 | 88.37 | 17.86 | no |
| Example 1-11 | formula 1-1 | 1 | formula 2-A1 | 0.5 | 87.19 | 18.51 | no |
| Example 1-12 | formula 1-1 | 1 | formula 2-A2 | 0.5 | 87.22 | 18.87 | no |
| Example 1-13 | formula 1-1 | 1 | formula 2-A3 | 0.5 | 87.31 | 19.58 | no |
| Example 1-14 | formula 1-1 | 1 | formula 2-A4 | 0.5 | 88.96 | 17.58 | no |
| Example 1-15 | formula 1-1 | 1 | formula 2-A5 | 0.5 | 88.68 | 18.45 | no |
| Example 1-16 | formula 1-1 | 1 | formula 2-A6 | 0.5 | 87.43 | 17.90 | no |
| Example 1-17 | formula 1-1 | 1 | formula 2-A7 | 0.5 | 86.96 | 18.92 | no |
| Example 1-18 | formula 1-1 | 1 | formula 2-A8 | 0.5 | 87.08 | 18.25 | no |
| Example 1-19 | formula 1-1 | 1 | formula 2-A9 | 0.5 | 87.10 | 18.33 | no |
| Example 1-20 | formula 1-1 | 1 | formula 2-B1 | 0.5 | 86.54 | 18.95 | no |
| Example 1-21 | formula 1-1 | 1 | formula 2-B2 | 0.5 | 86.68 | 18.29 | no |
| Example 1-22 | formula 1-1 | 1 | formula 2-B3 | 0.5 | 86.71 | 18.45 | no |

(continued)

| | Compound represented by formula 1 | C1(%) | Compound represented by formula 2 | C2(%) | Capacity retention rate (%) | Internal resistance growth rate (%) | Gas generation during storage |
|---|---|---|---|---|---|---|---|
| Example 1-23 | formula 1-1 | 1 | formula 2-B4 | 0.5 | 87.40 | 18.06 | no |
| Example 1-24 | formula 1-1 | 1 | formula 2-B5 | 0.5 | 88.96 | 17.74 | no |
| Example 1-25 | formula 1-1 | 1 | formula 2-B6 | 0.5 | 87.93 | 18.27 | no |
| Example 1-26 | formula 1-1 | 1 | formula 2-A10 | 0.5 | 87.28 | 19.28 | no |
| Comparative Example 1 | formula 1-1 | 1 | / | / | 57.12 | 58.29 | yes |
| Comparative Example 2 | / | / | formula 2-A10 | 0.5 | 49.01 | 68.15 | yes |
| Comparative Example 3 | / | / | / | / | 37.40 | 77.61 | yes |
| Comparative Example 4 | formula 1-1 | 1 | PS | 0.5 | 81.25 | 22.77 | yes |
| Comparative Example 5 | formula 1-1 | 1 | DTD | 0.5 | 83.18 | 20.14 | yes |
| Note: In Table 1, "/" indicates that the corresponding preparation parameter or substance does not exist. | | | | | | | |

From Examples 1-1 to 1-26 and Comparative Examples 1 to 5, it can be seen that for the electrochemical devices of the examples of the present application, the electrolytic solution includes the compound represented by formula 1 and the compound represented by formula 2 within the scope of the present application, whereas the electrochemical devices of the Comparative Examples do not simultaneously meet these characteristics. The electrochemical devices obtained in the examples exhibit a high capacity retention rate, a small internal resistance growth rate, and no gas generation during storage, indicating that the electrochemical devices have good high-temperature cycle performance, high-temperature storage performance, and a small internal resistance growth rate.

The type of the compound represented by formula 1 affects the high-temperature cycle performance, high-temperature storage performance, and internal resistance growth rate of the electrochemical device. From Examples 1-1 to 1-10 and Comparative Example 2, it can be seen that when the electrolytic solution includes the compound represented by formula 1 within the scope of the present application, the resulting electrochemical device exhibits a high capacity retention rate, a small internal resistance growth rate, and no gas generation during storage, indicating that the electrochemical device has good high-temperature cycle performance, high-temperature storage performance, and a small internal resistance growth rate.

The type of the compound represented by formula 2 affects the high-temperature cycle performance, high-temperature storage performance, and internal resistance growth rate of the electrochemical device. From Example 1-1, Examples 1-11 to 1-25, and Comparative Examples 1, 4, and 5, it can be seen that when the electrolytic solution includes the compound represented by formula 2 within the scope of the present application, the resulting electrochemical device exhibits a high capacity retention rate, a small internal resistance growth rate, and no gas generation during storage, indicating that the electrochemical device has good high-temperature cycle performance, high-temperature storage performance, and a small internal resistance growth rate.

Table 2

| | C1 (%) | C2 (%) | Mass ratio of the compound represented by formula 1 to the compound represented by formula 2 | $D_{50}$ (μm) | X (%) | m (N/m) | Relation I | C3 (%) | C4 (%) | C5 (%) | Capacity retention rate (%) | Internal resistance growth rate (%) | Gas generation during storage |
|---|---|---|---|---|---|---|---|---|---|---|---|---|---|
| Example 1-1 | 1 | 0.5 | 2.00 | 10 | 2 | 10 | 0.108 | 84.50 | 14 | 0 | 88.46 | 17.20 | no |
| Example 2-1 | 0.02 | 0.5 | 0.04 | 10 | 2 | 10 | 0.108 | 85.48 | 14 | 0 | 79.88 | 30.16 | no |
| Example 2-2 | 0.05 | 0.5 | 0.10 | 10 | 2 | 10 | 0.108 | 85.45 | 14 | 0 | 84.75 | 23.67 | no |
| Example 2-3 | 2 | 0.5 | 4.00 | 10 | 2 | 10 | 0.108 | 83.50 | 14 | 0 | 86.84 | 18.70 | no |
| Example 2-4 | 8 | 0.5 | 16.00 | 10 | 2 | 10 | 0.108 | 77.50 | 14 | 0 | 87.53 | 17.76 | no |
| Example 2-5 | 10 | 0.5 | 20.00 | 10 | 2 | 10 | 0.108 | 75.50 | 14 | 0 | 82.59 | 27.80 | no |
| Example 2-6 | 1 | 0.09 5 | 10.53 | 10 | 2 | 10 | 0.020 | 84.91 | 14 | 0 | 78.33 | 27.02 | no |
| Example 2-7 | 1 | 0.1 | 10.00 | 10 | 2 | 10 | 0.022 | 84.90 | 14 | 0 | 84.21 | 22.96 | no |
| Example 2-8 | 1 | 1 | 1.00 | 10 | 2 | 10 | 0.215 | 84.00 | 14 | 0 | 89.95 | 17.88 | no |
| Example 2-9 | 1 | 3 | 0.33 | 10 | 2 | 10 | 0.646 | 82.00 | 14 | 0 | 87.98 | 18.97 | no |
| Example 2-10 | 1 | 5 | 0.20 | 10 | 2 | 10 | 1.077 | 80.00 | 14 | 0 | 85.41 | 21.94 | no |
| Example 2-11 | 1 | 6 | 0.17 | 10 | 2 | 10 | 1.293 | 79.00 | 14 | 0 | 82.65 | 28.91 | no |
| Example 2-12 | 1 | 0.5 | 2.00 | 5 | 2 | 10 | 0.136 | 84.50 | 14 | 0 | 77.38 | 33.31 | no |
| Example 2-13 | 1 | 0.5 | 2.00 | 7 | 2 | 10 | 0.121 | 84.50 | 14 | 0 | 86.21 | 22.36 | no |
| Example 2-14 | 1 | 0.5 | 2.00 | 15 | 2 | 10 | 0.094 | 84.50 | 14 | 0 | 87.12 | 20.81 | no |
| Example 2-15 | 1 | 0.5 | 2.00 | 20 | 2 | 10 | 0.085 | 84.50 | 14 | 0 | 78.25 | 31.47 | no |
| Example 2-16 | 1 | 0.5 | 2.00 | 10 | 0.5 | 1 | 0.232 | 84.50 | 14 | 0 | 77.01 | 34.87 | no |
| Example 2-17 | 1 | 0.5 | 2.00 | 10 | 1.5 | 3 | 0.161 | 84.50 | 14 | 0 | 85.28 | 23.75 | no |
| Example 2-18 | 1 | 0.5 | 2.00 | 10 | 2.5 | 30 | 0.075 | 84.50 | 14 | 0 | 86.89 | 18.62 | no |
| Example 2-19 | 1 | 0.5 | 2.00 | 10 | 4 | 50 | 0.063 | 84.50 | 14 | 0 | 79.41 | 30.46 | no |
| Example 2-20 | 1 | 4.1 | 0.24 | 7 | 1.5 | 3 | 1.486 | 80.90 | 14 | 0 | 86.33 | 19.02 | no |
| Example 2-21 | 1 | 5 | 0.20 | 7 | 1.5 | 3 | 1.812 | 80.00 | 14 | 0 | 70.18 | 48.28 | no |

(continued)

| | C1 (%) | C2 (%) | Mass ratio of the compound represented by formula 1 to the compound represented by formula 2 | $D_{50}$ ($\mu$m) | X (%) | m (N/m) | Relation I | C3 (%) | C4 (%) | C5 (%) | Capacity retention rate (%) | Internal resistance growth rate (%) | Gas generation during storage |
|---|---|---|---|---|---|---|---|---|---|---|---|---|---|
| Example 2-22 | 1 | 0.1 | 10.00 | 15 | 2 | 10 | 0.019 | 84.90 | 14 | 0 | 70.89 | 49.10 | no |
| Example 2-23 | 1 | 5 | 0.20 | 7 | 0.5 | 1 | 2.614 | 80.00 | 14 | 0 | 65.41 | 69.21 | no |
| Example 2-24 | 1 | 5 | 0.20 | 5 | 1.5 | 3 | 2.027 | 80.00 | 14 | 0 | 68.24 | 68.24 | no |
| Example 2-25 | 1 | 0.5 | 2.00 | 10 | 2 | 10 | 0.108 | 83.70 | 14 | 0.8 (PS) | 89.39 | 16.34 | no |
| Example 2-26 | 1 | 0.5 | 2.00 | 10 | 2 | 10 | 0.108 | 74.50 | 14 | 10 (PS) | 90.39 | 14.38 | no |
| Example 2-27 | 1 | 0.5 | 2.00 | 10 | 2 | 10 | 0.108 | 64.50 | 14 | 20 (PS) | 89.10 | 16.11 | no |
| Example 2-28 | 1 | 0.5 | 2.00 | 10 | 2 | 10 | 0.108 | 83.70 | 14 | 0.8 ($LiBF_4$) | 89.92 | 16.29 | no |
| Example 2-29 | 1 | 0.5 | 2.00 | 10 | 2 | 10 | 0.108 | 84.50 | 14 | 0 | 86.22 | 17.33 | no |
| Example 2-30 | 1 | 0.5 | 2.00 | 10 | 2 | 10 | 0.108 | 88.50 | 10 | 0 | 84.83 | 19.09 | no |
| Example 2-31 | 1 | 0.5 | 2.00 | 10 | 2 | 10 | 0.108 | 80.50 | 18 | 0 | 90.28 | 14.98 | no |
| Example 2-32 | 1 | 0.5 | 2.00 | 10 | 2 | 10 | 0.108 | 84.50 | 14 | 0 | 88.61 | 17.81 | no |

The mass ratio of the compound represented by formula 1 to the compound represented by formula 2 affects the high-temperature cycle performance, high-temperature storage performance, and internal resistance growth rate of the electrochemical device. From Example 1-1 and Examples 2-1 to 2-11, it can be seen that by controlling the mass ratio of the compound represented by formula 1 to the compound represented by formula 2 in the electrolytic solution within the range of the present application, the resulting electrochemical device exhibits a high capacity retention rate, a small internal resistance growth rate, and no gas generation during storage, indicating that the electrochemical device has good high-temperature cycle performance, high-temperature storage performance, and a small internal resistance growth rate. Compared with Example 1-1 and Examples 2-2 to 2-4, the mass ratio of the compound represented by formula 1 to the compound represented by formula 2 in Example 2-1 is less than 0.1, resulting in a slightly lower capacity retention rate and a slightly larger internal resistance growth rate, indicating a weaker improvement in the high-temperature cycle performance and high-temperature storage performance of the electrochemical device. Compared with Example 1-1 and Examples 2-2 to 2-4, the mass ratio of the compound represented by formula 1 to the compound represented by formula 2 in Example 2-5 is greater than 16, resulting in a slightly lower capacity retention rate and a slightly larger internal resistance growth rate, indicating a weaker improvement in the high-temperature cycle performance and high-temperature storage performance of the electrochemical device.

The value of the mass percentage C1% of the compound represented by formula 1 affects the high-temperature cycle performance, high-temperature storage performance, and internal resistance growth rate of the electrochemical device. From Example 1-1 and Examples 2-1 to 2-5, it can be seen that by controlling the value of the mass percentage C1% of the compound represented by formula 1 within the range of the present application, the resulting electrochemical device exhibits a high capacity retention rate, a small internal resistance growth rate, and no gas generation during storage, indicating that the electrochemical device has good high-temperature cycle performance, high-temperature storage performance, and a small internal resistance growth rate.

The value of the mass percentage C2% of the compound represented by formula 2 affects the high-temperature cycle performance, high-temperature storage performance, and internal resistance growth rate of the electrochemical device. From Example 1-1 and Examples 2-6 to 2-11, it can be seen that by controlling the value of the mass percentage C2% of the compound represented by formula 2 within the range of the present application, the resulting electrochemical device exhibits a high capacity retention rate, a small internal resistance growth rate, and no gas generation during storage, indicating that the electrochemical device has good high-temperature cycle performance, high-temperature storage performance, and a small internal resistance growth rate.

The relationship between particle size $D_{50}$ of the negative electrode active material, the binding force m between the negative electrode material layer and the negative current collector, and the mass percentage C2% of the compound represented by formula 2 affects the high-temperature cycle performance, high-temperature storage performance, and internal resistance growth rate of the electrochemical device. From Example 1-1 and Examples 2-6 to 2-24, it can be seen that by controlling the values of $D_{50}$, m, and C2 to satisfy relation I, the resulting electrochemical device exhibits a high capacity retention rate, a small internal resistance growth rate, and no gas generation during storage, indicating that the electrochemical device has good high-temperature cycle performance, high-temperature storage performance, and a small internal resistance growth rate. From Examples 2-21 to 2-24, it can be seen that when the values of $D_{50}$, m, and C2 do not satisfy relation I, the resulting electrochemical device exhibits a lower capacity retention rate, a higher internal resistance growth rate, and gas generation during storage, indicating a weaker improvement in the high-temperature cycle performance and high-temperature storage performance of the electrochemical device.

The mass percentage and type of the additional electrolyte additives affect the high-temperature cycle performance, high-temperature storage performance, and internal resistance growth rate of the electrochemical device. From Example 1-1 and Examples 2-25 to 2-28, it can be seen that when the electrolytic solution includes the additional additives within the scope of the present application and their mass percentage is controlled within the range of the present application, the resulting electrochemical device exhibits a high capacity retention rate, a small internal resistance growth rate, and no gas generation during storage, indicating that the electrochemical device has good high-temperature cycle performance, high-temperature storage performance, and a small internal resistance growth rate.

The type and mass percentage of the electrolyte affect the high-temperature cycle performance, high-temperature storage performance, and internal resistance growth rate of the electrochemical device. From Example 1-1 and Examples 2-29 to 2-31, it can be seen that when the electrolytic solution includes the electrolyte within the scope of the present application and its mass percentage is controlled within the range of the present application, the resulting electrochemical device exhibits a high capacity retention rate, a small internal resistance growth rate, and no gas generation during storage, indicating that the electrochemical device has good high-temperature cycle performance, high-temperature storage performance, and a small internal resistance growth rate.

The type and mass percentage of the solvent affect the high-temperature cycle performance, high-temperature storage performance, and internal resistance growth rate of the electrochemical device. From Example 1-1 and Examples 2-1 to 2-32, it can be seen that when the electrolytic solution includes the solvent within the scope of the present application and its mass percentage is controlled within the range of the present application, the resulting electrochemical device

exhibits a high capacity retention rate, a small internal resistance growth rate, and no gas generation during storage, indicating that the electrochemical device has good high-temperature cycle performance, high-temperature storage performance, and a small internal resistance growth rate.

The foregoing descriptions are merely preferred embodiments of the present application and are not intended to limit the present application. Any modifications, equivalent replacements, improvements, etc., made within the spirit and principles of the present application shall be included within the scope of protection of the present application.

## Claims

1. An electrolyte additive, comprising a compound represented by formula 1 and a compound represented by formula 2, wherein the compound represented by formula 2 is selected from the group consisting of a compound represented by formula 2-A, a compound represented by formula 2-B, and a combination thereof:

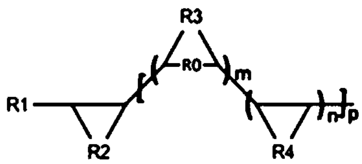

formula 1

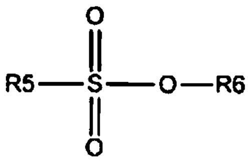

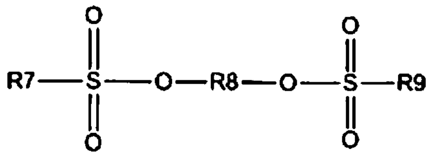

formula 2-A formula 2-B;

wherein m and n are each independently an integer ranging from 0 to 3; and m and n are not 0 at the same time; p is an integer ranging from 1 to 5; R0 is selected from the group consisting of single bond and methylene; R1 is selected from the group consisting of hydrogen, halogen, $C_1$ to $C_5$ hydrocarbon group and $C_1$ to $C_5$ halogenated hydrocarbon group; R2, R3, and R4 are each independently selected from the group consisting of

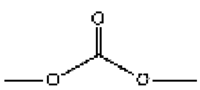 , 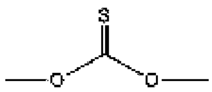 , 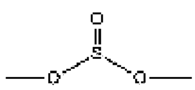 , 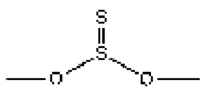 , 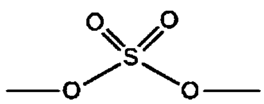

and

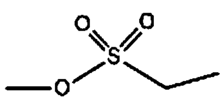 ;

R5 and R6 are each independently selected from the group consisting of substituted or unsubstituted phenyl, substituted or unsubstituted imidazolyl, substituted or unsubstituted $C_1$ to $C_5$ alkyl, substituted or unsubstituted $C_2$ to $C_5$ alkenyl, $C_1$ to $C_5$ alkoxy, substituted or unsubstituted $C_2$ to $C_5$ alkoxyalkyl, substituted or unsubstituted $C_1$ to $C_5$ carbonyl, substituted or unsubstituted $C_1$ to $C_5$ cyano, and halogen; when R5 and R6 are substituted, a substituent in each of R5 and R6 is independently selected from the group consisting of halogen and $C_1$ to $C_5$ alkyl; and

R7 and R9 are each independently selected from the group consisting of halogen and substituted or unsubstituted

$C_1$ to $C_5$ alkyl, R8 is selected from the group consisting of substituted or unsubstituted phenylene, substituted or unsubstituted $C_1$ to $C_5$ alkylene, $C_2$ to $C_5$ alkenylene, $C_2$ to $C_5$ alkynylene, and $C_2$ to $C_5$ alkyleneoxyalkylene; when R7 to R9 are substituted, a substituent in each of R7 to R9 is independently selected from the group consisting of halogen, hydroxyl, and phenyl.

2. The electrolyte additive according to claim 1, wherein a mass ratio of the compound represented by formula 1 to the compound represented by formula 2 ranges from 0.1:1 to 16:1.

3. The electrolyte additive according to claim 1 or 2, wherein the compound represented by formula 1 is selected from the group consisting of the following compounds and a combination thereof:

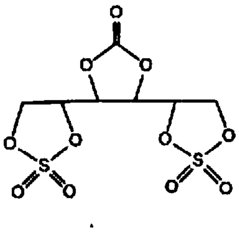
formula 1-1 ,
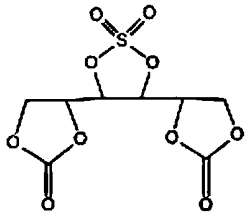
formula 1-2 ,
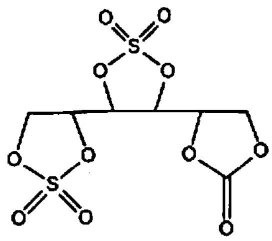
formula 1-3 ,
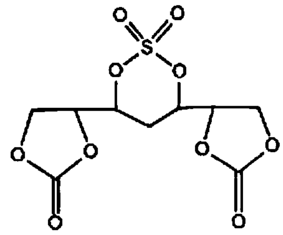
formula 1-4 ,
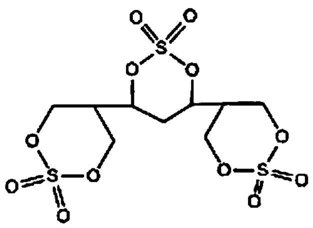
formula 1-5 ,
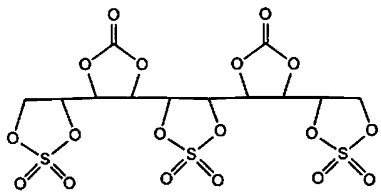
formula 1-6 ,
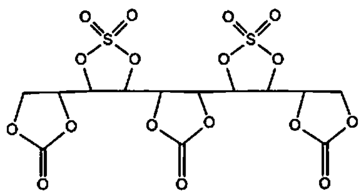
formula 1-7 ,
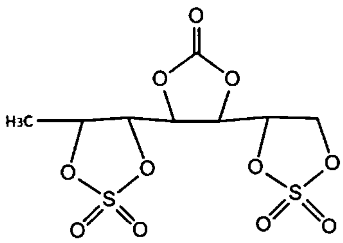
formula 1-8 ,
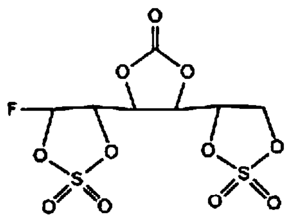
formula 1-9 ,
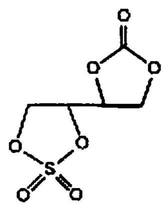
formula 1-10.

4. The electrolyte additive according to claim 3, wherein the compound represented by formula 1 is the compound represented by formula 1-1.

5. The electrolyte additive according to claim 1 or 2, wherein the compound represented by formula 2-A is selected from the group consisting of the following compounds and a combination thereof:

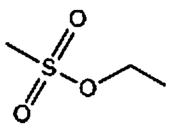
formula2-A1,
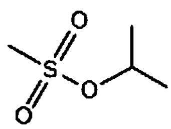
formula 2-A2,
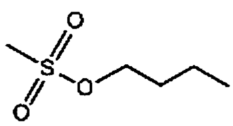
formula 2-A3,

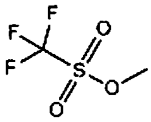 formula 2-A4, 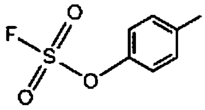 formula 2-A5, 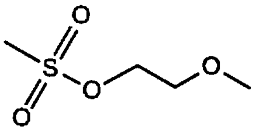 formula 2-A6,

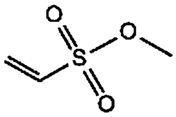 formula 2-A7, 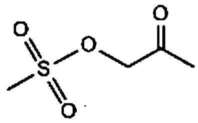 formula 2-A8, 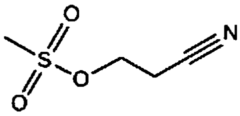 formula 2-A9,

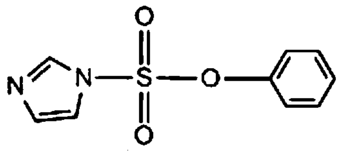 formula 2-A10.

6. The electrolyte additive according to claim 1 or 2, wherein the compound represented by formula 2-B is selected from the group consisting of the following compounds and a combination thereof:

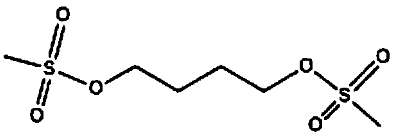 formula 2-B1, 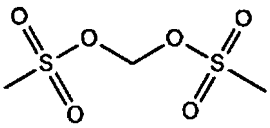 formula 2-B2,

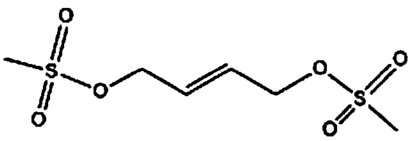 formula 2-B3, 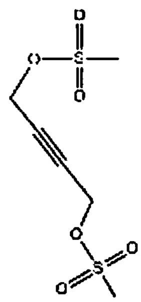 formula 2-B4,

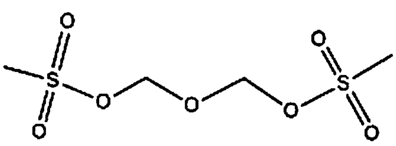 formula 2-B5, 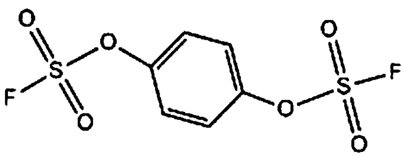 formula 2-B6.

7. The electrolyte additive according to claim 5, wherein the compound represented by formula 2 is the compound represented by formula 2-A10.

8. An electrolytic solution, comprising a solvent, an electrolyte, and the electrolyte additive according to any one of claims 1 to 7.

9. The electrolytic solution according to claim 8, wherein, based on a mass of the electrolytic solution, a mass percentage of the compound represented by formula 1 is C1%, and $0.05 \leq C1 \leq 8$; and/or, based on the mass of the electrolytic solution, a mass percentage of the compound represented by formula 2 is C2%, and $0.1 \leq C2 \leq 5$.

10. The electrolytic solution according to any one of claims 8 to 9, wherein the solvent is selected from the group consisting of a cyclic carbonate, an acyclic carbonate, an acyclic carboxylate, and a combination thereof; the cyclic carbonate is selected from the group consisting of ethylene carbonate, propylene carbonate, and a combination thereof; the acyclic

carbonate is selected from the group consisting of dimethyl carbonate, diethyl carbonate, ethyl methyl carbonate, and a combination thereof; the acyclic carboxylate is selected from the group consisting of ethyl acetate, ethyl butyrate, ethyl propionate, methyl propionate, propyl propionate, propyl acetate, and a combination thereof; based on the mass of the electrolytic solution, a mass percentage of the solvent is C3%, and $60 \leq C3 \leq 89$; and/or, the electrolyte is selected from the group consisting of a lithium salt and a sodium salt; the lithium salt is selected from the group consisting of lithium hexafluorophosphate, lithium bis(fluorosulfonyl)imide, lithium bis(trifluoromethanesulfonyl) imide, and a combination thereof; the sodium salt is selected from the group consisting of sodium hexafluorophosphate, sodium tetrafluoroborate, sodium bis(fluorosulfonyl)imide, sodium bis(trifluoromethanesulfonyl)imide, sodium bis(oxalato)borate, sodium difluoro(oxalato)borate, sodium difluorodioxalato phosphate, sodium tetrafluoro(oxalato)phosphate, sodium 4,5-dicyano-2-(trifluoromethyl)imidazole, and a combination thereof; based on the mass of the electrolytic solution, a mass percentage of the electrolyte is C4%, and $10 \leq C4 \leq 18$.

**11.** The electrolytic solution according to any one of claims 8 to 9, further comprising an additional electrolyte additive, wherein the additional electrolyte additive is selected from the group consisting of lithium tetrafluoroborate, 1,3-propanesultone, and a combination thereof; based on the mass of the electrolytic solution, the mass percentage of the additional electrolyte additive is C5%, $0.1 \leq C5 \leq 20$.

**12.** An electrochemical device, comprising a positive electrode plate, a negative electrode plate, a separator, and the electrolytic solution according to any one of claims 8 to 11;

the negative electrode plate comprises a negative current collector and a negative electrode material layer disposed on at least one surface of the negative current collector, the negative electrode material layer comprises a negative electrode active material, a negative electrode conductive agent, and a negative electrode binder, and the electrochemical device satisfies relation I:

$$0.02 \leqslant \frac{C2}{\sqrt[3]{D_{50} \times m}} \leqslant 1.5$$

relation I,

wherein $D_{50}$ is the particle size corresponding to 50% of cumulative volume when measured from the smaller particle size side in the volume-based particle size distribution of the negative electrode active material particles, in units of μm; m is the binding force between the negative electrode material layer and the negative current collector, in units of N/m; and C2% is the mass percentage of the compound represented by formula 2 based on the mass of the electrolytic solution.

**13.** The electrochemical device according to claim 12, satisfying at least one of the following conditions:

(1)

$$7\ \mu m \leq D_{50} \leq 15\ \mu m;$$

and
(2)

$$3\ N/m \leq m \leq 30\ N/m.$$

**INTERNATIONAL SEARCH REPORT**

International application No.
**PCT/CN2025/086488**

**A. CLASSIFICATION OF SUBJECT MATTER**

H01M10/0567(2010.01)i；H01M10/0525(2010.01)i；H01M10/42(2006.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, ENTXTC, VEN, CNKI: 电解液, 添加剂, 环状, 磺酸酯, 硫酸酯, 碳酸酯, 链状, 二磺酸酯, 硫类化合物, electrolyte, additive, cyclic, sulfonate, sulfate, carbonate, chain, disulfonate, sulfur compounds

**C. DOCUMENTS CONSIDERED TO BE RELEVANT**

| Category* | Citation of document, with indication, where appropriate, of the relevant passages | Relevant to claim No. |
|---|---|---|
| PX | CN 118486898 A (GUANGZHOU TINCI MATERIALS TECHNOLOGY CO., LTD.) 13 August 2024 (2024-08-13)<br>claims 1-13 | 1-13 |
| Y | CN 118281343 A (GUANGZHOU TINCI MATERIALS TECHNOLOGY CO., LTD.) 02 July 2024 (2024-07-02)<br>description, paragraphs 21-53 | 1, 3-11 |
| A | CN 118281343 A (GUANGZHOU TINCI MATERIALS TECHNOLOGY CO., LTD.) 02 July 2024 (2024-07-02)<br>description, paragraphs 21-53 | 2, 12-13 |
| Y | CN 112054241 A (GUANGZHOU TINCI MATERIALS TECHNOLOGY CO., LTD.) 08 December 2020 (2020-12-08)<br>description, paragraphs 12-24 | 1, 3-11 |
| A | CN 112054241 A (GUANGZHOU TINCI MATERIALS TECHNOLOGY CO., LTD.) 08 December 2020 (2020-12-08)<br>description, paragraphs 12-24 | 2, 12-13 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **12 June 2025** | **18 June 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**

International application No.
**PCT/CN2025/086488**

**C. DOCUMENTS CONSIDERED TO BE RELEVANT**

| Category* | Citation of document, with indication, where appropriate, of the relevant passages | Relevant to claim No. |
|---|---|---|
| Y | CN 110668978 A (GUANGZHOU TINCI MATERIALS TECHNOLOGY CO., LTD.) 10 January 2020 (2020-01-10) description, paragraphs [0035]-[0067] | 1, 3-11 |
| A | CN 110668978 A (GUANGZHOU TINCI MATERIALS TECHNOLOGY CO., LTD.) 10 January 2020 (2020-01-10) description, paragraphs 35-67 | 2, 12-13 |
| Y | CN 115911558 A (SHENZHEN CAPCHEM TECHNOLOGY CO., LTD.) 04 April 2023 (2023-04-04) description, paragraphs 3-33 | 1, 3-11 |
| A | CN 115911558 A (SHENZHEN CAPCHEM TECHNOLOGY CO., LTD.) 04 April 2023 (2023-04-04) description, paragraphs 3-33 | 2, 12-13 |
| Y | CN 114464887 A (SHENZHEN CAPCHEM TECHNOLOGY CO., LTD.) 10 May 2022 (2022-05-10) description, paragraphs 4-43 | 1, 3-11 |
| A | CN 114464887 A (SHENZHEN CAPCHEM TECHNOLOGY CO., LTD.) 10 May 2022 (2022-05-10) description, paragraphs 4-43 | 2, 12-13 |
| Y | CN 115036572 A (SHENZHEN CAPCHEM TECHNOLOGY CO., LTD.) 09 September 2022 (2022-09-09) description, paragraphs 4-43 | 1, 3-11 |
| A | CN 115036572 A (SHENZHEN CAPCHEM TECHNOLOGY CO., LTD.) 09 September 2022 (2022-09-09) description, paragraphs 4-43 | 2, 12-13 |
| A | JP 2015191807 A (SUMITOMO SEIKA CHEMICALS CO., LTD.) 02 November 2015 (2015-11-02) entire document | 1-13 |

Form PCT/ISA/210 (second sheet) (July 2022)

**INTERNATIONAL SEARCH REPORT**
**Information on patent family members**

International application No.
**PCT/CN2025/086488**

| Patent document cited in search report | Publication date (day/month/year) | Patent family member(s) | Publication date (day/month/year) |
|---|---|---|---|
| CN 118486898 A | 13 August 2024 | CN 118486898 B | 25 October 2024 |
| CN 118281343 A | 02 July 2024 | CN 118281343 B | 25 October 2024 |
| CN 112054241 A | 08 December 2020 | CN 112054241 B | 21 June 2022 |
| CN 110668978 A | 10 January 2020 | US 2023009549 A1 | 12 January 2023 |
| | | WO 2021057597 A1 | 01 April 2021 |
| | | EP 4043433 A1 | 17 August 2022 |
| | | EP 4043433 A4 | 07 December 2022 |
| | | EP 4043433 B1 | 20 March 2024 |
| CN 115911558 A | 04 April 2023 | CN 115911558 B | 31 May 2024 |
| | | WO 2024120067 A1 | 13 June 2024 |
| CN 114464887 A | 10 May 2022 | WO 2023124604 A1 | 06 July 2023 |
| | | CN 114464887 B | 05 April 2024 |
| | | EP 4231406 A1 | 23 August 2023 |
| | | EP 4231406 A4 | 14 August 2024 |
| | | US 2024136577 A1 | 25 April 2024 |
| CN 115036572 A | 09 September 2022 | WO 2023246279 A1 | 28 December 2023 |
| JP 2015191807 A | 02 November 2015 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202410910196
- GB 27901995 T